# EUROPEAN PATENT SPECIFICATION

(11) **EP 3 380 919 B1**
(45) Date of publication and mention of the grant of the patent: **20.01.2021**
(21) Application number: 15802209.5
(22) Date of filing: 23.11.2015
(51) Int. Cl.: G06F 3/0488, G06F 3/01, G06F 3/0482

(54) **SYSTEM FOR AND METHOD OF CONTROLLING FUNCTIONS IN A VEHICLE CABIN**
SYSTEM UND VERFAHREN ZUR STEUERUNG VON FUNKTIONEN IN EINER FAHRZEUGKABINE
SYSTÈME ET PROCÉDÉ DE COMMANDE DE FONCTIONS DANS UNE CABINE DE VÉHICULE

(43) Date of publication of application: 03.10.2018
(73) Proprietor: Bombardier Inc., Dorval, Québec H4S 1Y9 (CA); Short Brothers Plc, Belfast BT3 9DZ (GB)
(72) Inventor: FAGAN, Tim, Beaconsfield Québec H9W 5N3 (CA); BARTENBACH, Jeff, Seattle WA 98112 (US); WALDMAN, Erick, Seattle WA 98122 (US); CONNER, Brian, Seattle WA 98107 (US); NANCARROW, Linsey, Seattle WA 98115 (US); HOBBS, Tom, Seattle WA 98144 (US); PIRIE, Chris, Mulkilteo WA 98275 (US); MCBRIDE, Heidi, Seattle WA 98103 (US); PETRY, Sebastian, Seattle WA 98107 (US); LAVALLEE, Louis-Xavier, Montreal Quebec H2P 2J4 (CA); MALEK, Bruce, Senneville Québec H9X 1B1 (CA)
(74) Representative: HGF
(86) International application number: PCT/IB2015/059049
(87) International publication number: WO 2017/089858

(56) References cited:
- US-A1- 2008 234 893
- US-A1- 2009 249 408
- US-A1- 2014 085 337
- US-A1- 2014 309 868
- US-B1- 8 613 385

## Description

### Field of the Technology

The present patent application is directed to a distributed architecture for a system and a method of operation of the system incorporating a graphical user interface that provides control over one or more functions within the cabin of a vehicle, such as an aircraft. More specifically, the present technology provides a multi-point interface that permits one or more persons on an aircraft to control various functions within the cabin of the aircraft.

### Description of the Related Art

As should be apparent to those skilled in the art, there arc a number of functions that may be controlled within the cabin of an aircraft. The functions may be divided into at least two categories: (1) functions related to environment, and (2) functions related to passenger comfort and entertainment.

Environmental functions include, but are not limited to, things such as cabin temperature, the intensity of the cabin lighting, and the degree to which the window shades are open, among other variables.

Functions related to passenger comfort include those related to actuation of a personal reading light, control over the air flow through an overhead vent, positioning of the passenger seat *(i.e.,* upright or reclined), and a remote call for a flight attendant *(i.e.,* a flight attendant call button).

Other functions that are associated with passenger comfort include, but are not limited to control over media type (*i.e*., audio and/or video), content, and volume. With respect to content, selectivity may be provided so that a passenger may select a genre of music (*i.e*., jazz music or pop music) or a genre of movies (*i.e*., comedy or drama), among other variations. As should be apparent to any passenger, individuals may control the volume of the media that has been selected.

At present, selected the environmental functions typically are adjusted by the flight crew for the comfort of all passengers within the aircraft. For example, temperature typically is controlled at a central location within the aircraft cabin, via a thermostat or similar temperature control device. Similarly, the main cabin lighting in the aircraft typically is controlled via a central panel available to the flight crew. As a result, the flight crew can turn on, turn off, or dim the main lights within the aircraft cabin for all of the passengers.

As should be apparent to the airplane traveler, functions associated with passenger comfort and entertainment typically are accessible directly from the passenger's seat.

This basic operational approach to aircraft cabin functions has been employed for many years. As presently configured, the control systems for the environment and for passenger comfort and entertainment within an aircraft operate independently from one another.

Recently, a desire has developed to improve the manner in which aircraft cabin functions are controlled. Specifically, a desire has arisen for a more centralized and coordinated operation of selected functions that are available within the cabin of an aircraft.

Prior art proposals can be found in US2008/234893A, US8613385B, US2009/249408A, US2014/085337A and US2014/309868A.

### Summary of the Technology

The present technology provides a distributed architecture for an aircraft that permits users, whether flight crew, passengers, or other individuals, to control one or more functions within an aircraft cabin.

In particular, it is one aspect of the present technology to provide a distributed architecture for multi-nodal control of functions in an aircraft cabin, comprising:
a processor;
a controller operatively connected to the processor;
a passenger IO node operatively connected to the controller; and
a crew IO node operatively connected to the controller;
wherein the controller controls at least one controllable parameter in response to inputs received from at least one of the passenger IO node and the crew IO node,
wherein the at least one controllable parameter comprises at least one of light intensity in the aircraft cabin, color of light in the aircraft cabin, temperature in the aircraft cabin, and a degree of openness of a window shade in the aircraft cabin, and
wherein the controller includes a command hierarchy to prioritize inputs received from the passenger IO node and the crew IO node to prevent conflicts between the inputs.

In some implementations, the command hierarchy prioritizes inputs from the crew IO node for at least one of the light intensity in the aircraft cabin, the color of light in the aircraft cabin, the temperature in the aircraft cabin, and the degree of openness of the window shades in the aircraft cabin, and prioritizes inputs from the passenger IO node for at least one other of the light intensity in the aircraft cabin, the color of light in the aircraft cabin, the temperature in the vehicle cabin, and the degree of openness of the window shades in the aircraft cabin.

In some further implementations, the command hierarchy prioritizes inputs received from the passenger IO node and the crew IO node based on an operation mode of the aircraft.

In some implementations, a modification of the operation mode of the aircraft results in a modification of the command hierarchy.

In some further implementations, the operation mode of the aircraft comprises at least one a take-off mode, a cruise mode, a landing mode and an emergency mode.

In some implementations, the passenger IO node comprises at least one of a side ledge IO node and a mobile passenger IO node.

In some further implementations, the crew IO node comprises at least one of a mobile crew IO node and a non-mobile crew IO node.

In some implementations, the controller controls the at least one controllable parameter in response to inputs received from a bulkhead IO node.

In some further implementations, the bulkhead IO node is disposed on a bulkhead within the aircraft cabin.

In some implementations, a side ledge IO node is disposed in at least one of a ledge adjacent to a passenger seat, a cabinet adjacent to a divan and a night stand adjacent to a bed.

In some further implementations, the controller includes a command hierarchy to prioritize inputs received from at least two of the bulkhead IO node, the side ledge IO node, the mobile passenger IO node and the crew mobile IO node to prevent conflicts between the inputs.

In some implementations, the controllable parameters are associated with at least one of the entire cabin of the aircraft, at least one zone within the cabin of the aircraft and at least one seat within the cabin of the aircraft.

In some further implementations, the controllable parameters also includes at least one of media type, media content, media volume, scheduling, notes, reports, presets and a passenger manifest.

In some implementations, it is another aspect of the present technology to provide a method for controlling functions in an aircraft cabin having a distributed architecture for multi-nodal control, the method comprising:
displaying, on a display screen, a menu for at least one controllable parameter on a graphical user interface of at least one of a passenger IO node and a crew IO node;
receiving a control input for the at least one controllable parameter from the at least one of the passenger IO node and the crew IO node;
adjusting, by a controller, the at least one controllable parameter consistent with the control input,
wherein the at least one controllable parameter comprises at least one of light intensity in the aircraft cabin, color on light in the aircraft cabin, temperature in the aircraft cabin and a degree of openness of a window shade in the aircraft cabin, and
wherein the controller includes a command hierarchy to prioritize the inputs received from the passenger IO node and the crew IO node so as to prevent conflicts between the inputs.

In some further implementations, the command hierarchy prioritizes inputs received from the passenger IO node and the crew IO node based on an operation mode of the aircraft.

In some implementations, a modification of the operation mode of the aircraft results in a modification of the command hierarchy.

In some further implementations, the operation mode of the aircraft comprises at least one a take-off mode, a cruise mode, a landing mode and an emergency mode.

In some implementations, the passenger IO node comprises at least one of a side ledge IO node and a passenger mobile IO node.

In some further implementations, the side ledge IO node is disposed in at least one of a ledge adjacent to a passenger seat, a cabinet adjacent to a divan and a night stand adjacent to a bed.

In some implementations, the crew IO node comprises at least one of a mobile crew IO node and a non-mobile crew IO node.

In some further implementations, the controller controls the at least one controllable parameter in response to inputs received from a bulkhead IO node, and wherein the bulkhead IO node is disposed on a bulkhead within the aircraft cabin.

In some implementations, the controller includes a command hierarchy to prioritize inputs received from the bulkhead IO node, the side ledge IO node, the mobile passenger IO node and the mobile crew IO node so as to prevent conflicts between the inputs.

In some further implementations, the controllable parameters also includes at least one of media type, media content, media volume, scheduling, notes, reports, presets and a passenger manifest.

In some implementations, the method further comprises:
placing the graphical user interface into a sleep mode if selection of a controllable parameter is not received.

In some further implementations, the controllable parameter is associated with at least one of the entire cabin of the aircraft, at least one zone within the cabin of the aircraft and at least one seat within the cabin of the aircraft.

In some implementations, the parameter is controllable via an interface presenting an isometric view of at least a portion of the cabin of the aircraft.

In some further implementations, light intensity includes an illumination for at least one of a cabin light, a table light and a reading light.
In some implementations, the media content includes a video library, an audio library and a map view.

In some implementations, the map view comprises a global map view and a local map view.

In some further implementations, the displaying of the menu for the at least one controllable parameter includes displaying a light icon, a media icon, a thermostat icon and a window shade icon.

In some implementations, it is another aspect of the present technology to provide a non-transitory executable computer program product providing instructions for a method for controlling functions in an aircraft cabin having a distributed architecture for multi-nodal control, the instructions, upon being executed by a processor, causing:
displaying, on a display screen, a menu for at least one controllable parameter on a graphical user interface of at least one of a passenger IO node and a crew IO node;
receiving a control input for the at least one controllable parameter from the at least one of the passenger IO node and the crew IO node;
adjusting, by a controller, the at least one controllable parameter consistent with the control input,
wherein the at least one controllable parameter comprises at least one of light intensity in the aircraft cabin, color on light in the aircraft cabin, temperature in the aircraft cabin and a degree of openness of a window shade in the aircraft cabin, and
wherein the controller includes a command hierarchy to prioritize the inputs received from the passenger IO node and the crew IO node so as to prevent conflicts between the inputs.

In some further implementations, the passenger IO node comprises at least one of a side ledge IO node and a passenger mobile IO node.

In some implementations, the side ledge IO node is disposed in at least one of a ledge adjacent to a passenger seat, a cabinet adjacent to a divan and a night stand adjacent to a bed.

In some further implementations, the crew IO node comprises at least one of a mobile crew IO node and a non-mobile crew IO node.

In some implementations, the controller controls the at least one controllable parameter in response to inputs received from a bulkhead IO node, and wherein the bulkhead IO node is disposed on a bulkhead within the aircraft cabin.

In some further implementations, the controller includes a command hierarchy to prioritize inputs received from the bulkhead IO node, the side ledge IO node, the mobile passenger IO node and the mobile crew IO node so as to prevent conflicts between the inputs.

In some implementations, the controllable parameters also includes at least one of media type, media content, media volume, scheduling, notes, reports, presets and a passenger manifest.

In some further implementations, the non-transitory executable computer program product further comprises placing the graphical user interface into a sleep mode if selection of a controllable parameter is not received.

In some implementations, the controllable parameter is associated with at least one of the entire cabin of the aircraft, at least one zone within the cabin of the aircraft and at least one seat within the cabin of the aircraft.

In some further implementations, the parameter is controllable via an interface presenting an isometric view of at least a portion of the cabin of the aircraft.

In some implementations, light intensity includes an illumination for at least one of a cabin light, a table light and a reading light.

In some further implementations, the media content includes a video library, an audio library and a map view.

In some implementations, the map view comprises a global map view and a local map view.

In some further implementations, the displaying of the menu for the at least one controllable parameter includes displaying a light icon, a media icon, a thermostat icon and a window shade icon.

In some implementations, the processor is further configured to execute:
receiving, by at least one of the passenger IO node connected to the distributed architecture and the crew IO node connected to the distributed architecture, a first input from a user for activating a graphical user interface component;
upon determining, by the processor, that a media stream is playing on at least one system at least partially controllable via the distributed architecture, the system being different from the at least one of the passenger IO node and the crew IO node, executing:
   displaying, on the one of the passenger IO node and the crew IO node, a media control menu allowing modification of a media parameter associated with the media stream via a second input from the user on the one of the passenger IO node and the crew IO node, the second input being a direct input from the user; and
upon determining, by the processor, that no media stream is playing on any of the at least one system, executing:
   displaying, on the at least one of the passenger IO node and the crew IO node, a non-media menu allowing selection of a parameter associated with a controllable function via a third input from the user on the one of the passenger IO node and the crew IO node, the parameter being different from the media parameter associated with the media stream.

In some further implementations, the processor is further configured to execute:
displaying, on at least one of the passenger IO node and the crew IO node, a graphical user interface component representing at least a portion of an aircraft cabin divided into at least two aircraft cabin sections;
receiving, by the at least one of the passenger IO node and the crew IO node, a first input from a user for selecting one of the at least two aircraft cabin sections;
receiving, by the at least one of the passenger IO node and the crew IO node, a second input from the user for selecting the preset of the at least one controllable parameter;
upon determining, by the processor associated with the distributed architecture, that a modification of the selected preset for the selected aircraft cabin section is requested by the user, executing:
   displaying, on the at least one of the passenger IO node and the crew IO node, a preset setting menu including the at least one controllable parameter associated with the selected preset, the at least one controllable parameter allowing modification of at least one of the functions of the aircraft cabin for the selected aircraft cabin section;
   receiving, by the at least one of the passenger IO node and the crew IO node, a third input from the user for modifying the at least one controllable parameter;
   generating a modified preset based on the modified at least one controllable parameter; and
   saving, in a memory associated with the distributed architecture, the modified preset.

In some implementations, the processor is further configured to execute:
displaying, on at least one of the passenger IO node and the crew IO node, a graphical user interface component representing at least a portion of an aircraft cabin divided into at least two aircraft cabin sections;
receiving, by the at least one of the passenger IO node and the crew IO node, a first input from a user for selecting one of the at least two aircraft cabin sections;
receiving, by the at least one of the passenger IO node and the crew IO node, a second input from the user for selecting the preset of controllable parameters;
determining, by the processor associated with the distributed architecture, a phase of a journey based at least on a function of time; and
dynamically adjusting, by the controller associated with the distributed architecture, at least one of the controllable parameters based on the selected preset and the determined phase of the journey for the selected aircraft cabin section.

In some further implementations, the method further comprises:
receiving, by at least one of the passenger IO node connected to the distributed architecture and the crew IO node connected to the distributed architecture, a first input from a user for activating a graphical user interface component;
upon determining, by the processor, that a media stream is playing on at least one system at least partially controllable via the distributed architecture, the system being different from the at least one of the passenger IO node and the crew IO node, executing:
   displaying, on the one of the passenger IO node and the crew IO node, a media control menu allowing modification of a media parameter associated with the media stream via a second input from the user on the one of the passenger IO node and the crew IO node, the second input being a direct input from the user; and
upon determining, by the processor, that no media stream is playing on any of the at least one system, executing:
   displaying, on the at least one of the passenger IO node and the crew IO node, a non-media menu allowing selection of a parameter associated with a controllable function via a third input from the user on the one of the passenger IO node and the crew IO node, the parameter being different from the media parameter associated with the media stream.

In some implementations, the method comprises:
displaying, on at least one of the passenger IO node and the crew IO node, a graphical user interface component representing at least a portion of an aircraft cabin divided into at least two aircraft cabin sections;
receiving, by the at least one of the passenger IO node and the crew IO node, a first input from a user for selecting one of the at least two aircraft cabin sections;
receiving, by the at least one of the passenger IO node and the crew IO node, a second input from the user for selecting a preset of the at least one controllable parameter;
upon determining, by the processor associated with the distributed architecture, that a modification of the selected preset for the selected aircraft cabin section is requested by the user, executing:
   displaying, on the at least one of the passenger IO node and the crew IO node, a preset setting menu including the at least one controllable parameter associated with the selected preset, the at least one controllable parameter allowing modification of at least one of the functions of the aircraft cabin for the selected aircraft cabin section;
   receiving, by the at least one of the passenger IO node and the crew IO node, a third input from the user for modifying the at least one controllable parameter;
   generating a modified preset based on the modified at least one controllable parameter; and
   saving, in a memory associated with the distributed architecture, the modified preset.

In some further implementations, the method further comprises:
displaying, on at least one of the passenger IO node and the crew IO node, a graphical user interface component representing at least a portion of an aircraft cabin divided into at least two aircraft cabin sections;
receiving, by the at least one of the passenger IO node and the crew IO node, a first input from a user for selecting one of the at least two aircraft cabin sections;
receiving, by the at least one of the passenger IO node and the crew IO node, a second input from the user for selecting a preset of controllable parameters;
determining, by the processor associated with the distributed architecture, a phase of a journey based at least on a function of time; and
dynamically adjusting, by the controller associated with the distributed architecture, at least one of the controllable parameters based on the selected preset and the determined phase of the journey for the selected aircraft cabin section.

It is another aspect of the present technology to provide a first control method for controlling windows shades comprising a first window shade made from a sheet of material and a second window shade made from an electrochromic material. The control method comprises, starting from a position in which the first window shade is fully open and the second window shade is transparent, causing:
upon a first command being issued to at least partially close the window shades, increasing an opacity of the second window shade while not (or slightly) modifying a position of the first window shade;
upon a second command (automatically or manually) being issued to fully close the window shades, increasing the opacity to a maximum level; and
upon reaching the maximum level (or slightly before), moving the position of the first window shade from an open (or partially open) position to a fully close position.

It is another aspect of the present technology to provide a second control method for controlling windows shades comprising a first window shade made from a sheet of material and a second window shade made from an electrochromic material. The control method comprises, starting from a close position in which the first window shade is fully close and the second window shade is at a maximum level of opacity, causing:
upon a first command being issued by to at least partially open the window shades, modifying a position of the first window shade while not (or slightly) decreasing the opacity of the second window shade;
upon a second command (automatically or manually) being issued to fully open the window shades, fully opening the first window shade; and
upon reaching the fully open position of the first window shade (or slightly before), decreasing the level of opacity of the second window shade to its minimum level.

In other aspects, various implementations of the present technology provide a non-transitory computer-readable medium storing program instructions, the program instructions being executable by a processor of a computer-based system to carry out one or more of the above-recited methods.

Still further aspects of the present technology will be made apparent from the drawings and description that follows.

Hereabove a plurality of aspects of the present technology have been presented. Not all of these aspects necessarily fall under the scope of the invention.

Instead, the scope of the invention is defined by the appended independent claims. Preferred embodiments are defined by the appended dependent claims.

### Brief Description of the Drawings

The present technology will now be described in connection with the figures appended hereto, in which:
Fig. 1 is a graphical overview of one embodiment of the distributed architecture contemplated by the present technology;
Fig. 2 is a graphical overview of a second embodiment of the distributed architecture contemplated by the present technology;
Fig. 3 is a graphical, top view of a portion of an aircraft, depicting one possible configuration for an aircraft cabin that employs the distributed architecture of the present technology;
Fig. 4 is a perspective illustration of a window input control node (referred to herein as a "window node") forming a part of the distributed architecture of the present technology;
Fig. 5 is a perspective illustration of a table control node (referred to herein as a "table node") forming a part of the distributed architecture of the present technology;
Fig. 6 is a front, graphical view of a bulkhead within the aircraft cabin incorporating a bulkhead IO control node (referred to herein as a bulkhead IO node) also forming a part of the distributed architecture of the present technology;
Fig. 7 is an enlarged, elevational view of the bulkhead IO node that is depicted in Fig. 6, illustrating one mode of operation thereof;
Fig. 8 is a perspective illustration of a side ledge IO control node (referred to herein as a "side ledge IO node") forming a part of the distributed architecture of the present technology;
Fig. 9 is a graphical representation of the side ledge IO node depicted in Fig. 8, providing a partial representation of the input decision tree associated with the functionality of that node;
Fig. 10 depicts a first screen from a passenger IO control node (referred to herein as a "passenger IO node") forming a part of the distributed architecture of the present technology;
Fig. 11 depicts a second screen contemplated for the passenger IO control node depicted in Fig. 9;
Fig. 12 provides a first screen from a flight crew IO control node (referred to herein as a "crew IO node"), illustrating several of the functions accessible by a member of the flight crew;
Fig. 13 illustrates one contemplated method for the operation of the distributed architecture of the present technology;
Fig. 14 illustrates another contemplated method for the operation of the distributed architecture of the present technology;
Fig. 15 illustrates one contemplated method for the operation of the distributed architecture of the present technology;
Fig. 16 illustrates a second screen from the crew IO control node or from the passenger IO node;
Fig. 17 illustrates a first interaction of a user with the second screen of Fig. 17;
Fig. 18 illustrates a second interaction of the user with a third screen from the crew IO control node or from the passenger IO node;
Fig. 19 illustrates a third interaction of the user with the third screen of Fig. 17;
Fig. 20 illustrates a third screen from the crew IO control node or from the passenger IO node;
Fig. 21 illustrates a fourth screen from the crew IO control node or from the passenger IO node;
Fig. 22 illustrates a fifth screen from the crew IO control node or from the passenger IO node;
Fig. 23 illustrates a sixth screen from the crew IO control node or from the passenger IO node;
Fig. 24 illustrates a fourth interaction of the user with the sixth screen of Fig. 23;
Fig. 25 illustrates another contemplated method for the operation of the distributed architecture of the present technology;
Fig. 26 illustrates a fifth interaction of the user with a seventh screen from the crew IO control node or from the passenger IO node;
Fig. 27 illustrates a eight screen from the crew IO control node or from the passenger IO node;
Fig. 28 illustrates a ninth screen from the crew IO control node or from the passenger IO node;
Fig. 29 illustrates a tenth screen from the crew IO control node or from the passenger IO node; and
Fig. 30 illustrates an eleventh screen from the crew IO control node or from the passenger IO node.

### Detailed Description of Embodiment(s) of the Present Technology

The present technology will now be described in connection with one or more embodiments. The discussion of any one embodiment is not intended to be restrictive or limiting of the present technology. To the contrary, the embodiments described are intended to be illustrative of the broad scope of the present technology.

Among other aspects, the present technology addresses controls for parameters on board an aircraft including environmental functions and functions related to passenger comfort. As noted above, environmental functions include, but are not limited to, things such as cabin temperature, the intensity of the cabin lighting, and the degree to which the window shades are open, among other variables. Functions related to passenger comfort include those related to actuation of a personal reading light, control over the air flow through an overhead vent, positioning of the passenger seat *(i.e.,* upright or reclined), and a remote call for a flight attendant *(i.e.,* a flight attendant call button). Other functions that are associated with passenger comfort include, but are not limited to control over media type *(i.e.,* audio and/or video), content, and volume. With respect to content, selectivity may be provided so that a passenger may select a genre of music *(i.e.,* jazz music or pop music) or a genre of movies *(i.e.,* comedy or drama), among other variations. Individuals may control the volume of the media that has been selected.

As should be apparent, and as will be made more apparent in the discussion that follows, the labels "environment" and "passenger comfort" when applied to specific functions that are controllable in an aircraft are merely provided to assist with an understanding of the present technology. Use of either of the labels is not intended to be limiting, as the labels are not considered to be mutually exclusive of one another or of other functions that are not highlighted herein. For example, control over the degree to which the window shades are opened qualifies as control over an environmental function and also over aspects of passenger comfort. The lights in the aircraft belong to the same, crossover category.

With respect to the present technology, the terms "front" (or "fore"), "rear" (or "aft"), left (or "port"), and right (or "starboard") are used in the conventional fashion when referring to an aircraft. These conventions refer to the front, rear, left, and right sides of an aircraft as determined by its normal, forward direction of travel.

In addition, reference is made to members of the flight crew on board the aircraft. The term "flight crew" is intended to be generic to any member of the flight crew, including the pilot, co-pilot, and/or flight attendants. In other words, the term "flight crew" is intended to refer to persons other than passengers on board the aircraft.

The term "bulkhead" is used in the discussion of the present technology. A bulkhead is wall that is disposed within the aircraft. A bulkhead may or may not be a structural component of the aircraft.

It is contemplated that the distributed architecture of the present technology (and associated features) may be provided on a corporate or private aircraft. In other words, it is contemplated that the present technology may be employed in an aircraft that typically has limited seating by comparison with a commercial, passenger aircraft. While corporate, business, or personal aircraft encompass the primary focus of the distributed architecture of the present technology, the present technology is not limited thereto. To the contrary, the present technology may be employed in any aircraft, including commercial passenger aircraft, without departing from the scope of the present technology.

In addition, while the present technology is contemplated to be employed on an aircraft, it is noted that the present technology may be employed in any other suitable environment. For example, the present technology may be practiced on a passenger car of a train, on board a ship, or any other suitable environment that should be apparent to those skilled in the art.

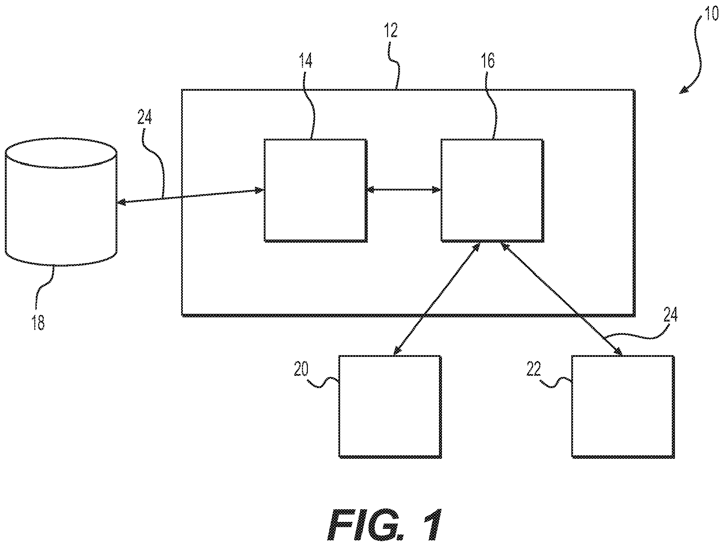

The distributed architecture 10 of the present technology is illustrated in Fig. 1. The distributed architecture includes a central processing unit 12 ("CPU") that includes a processor 14 and a controller 16. The CPU 12 may be a computer, as should be apparent to those skilled in the art. However, the term CPU 12 is not intended to be limited only to a computer or any part thereof. To the contrary, the term CPU 12 is intended to encompass any type of computing device that may operate to provide the functionality described herein.

The term "processor" is intended to broadly encompass any device capable of executing machine-readable instructions. In other words, the term "processor 14" is intended to refer to any device or component that processes instructions and data. As an example, semiconductor chips within a computer are considered to fall within the definition of the term "processor 14."

While it is contemplated that the processor 14 will be a single component of the distributed architecture 10 of the present technology, the present technology is not intended to be so limiting. The processor 14 may include multiple devices that are separate from one another, but cooperate together to process data and execute instructions. For example, the processor 14 may include a semiconductor processing chip and/or any other peripheral devices that support the operation of the semiconductor processing chip. Alternatively, the processor 14 may encompass processing chips that are located in separate systems, but which are operatively connected to provide the functionality described herein.

As also illustrated in Fig. 1, the CPU 12 includes a controller 16. In one embodiment of the present technology, it is contemplated that the controller 16 may be a hardware component that is separate from the processor 14. In a second contemplated embodiment, the controller 16 may be embodied in software *(i.e.,* operating software) that runs on the central processing unit 12. In other words, in this second embodiment, the processor 14 may be the device on which the controller 16 is executed. In a third contemplated embodiment, the controller 16 may be a combination of hardware and software. Regardless of whether the controller 16 is hardware, software, or a combination of the two, it is contemplated that the controller 16 will facilitate communication between the processor 14 and any input/output ("IO") and/or peripheral devices connected thereto. The peripheral devices include the IO nodes that are discussed herein. The peripheral devices also include the input nodes that are discussed herein.

While the distributed architecture 10 is described in terms of a CPU 12, a processor 14, and a controller 16 (among other components), it is noted that this configuration is not intended to be illustrative of the breadth of the present technology. The configuration is not intended to exclude any possible server/client configurations. For example, the CPU 12 may be a server on which a client is resident. The controller 16 may be the client. In another configuration, the CPU 12 may be a server that provides access to an independent client. In still another configuration, the CPU 12 may be a router.

As should be apparent, there are many appellations that may be applied to the components comprising the distributed architecture 10. Those variations and equivalents are intended to be encompassed by the scope of the present technology.

As illustrated in Fig. 1, the processor 14 may connect to one or more databases 18. The database 18 may be a memory storage device, a device such as an MP3 player, a compact disc ("CD") player, a digital video disk ("DVD") player, or any other suitable storage and playback device. To emphasize the breadth of what is meant by the term, the database 18 may include, but is not limited to, any suitable memory on which the CPU 12 relies for its operation. The term database 18 should not be understood to be limited solely to memory devices.

It is noted that the distributed architecture 10 of the present technology also may be connected to other systems and processors on board the aircraft. For example, the distributed architecture 10 may receive input from a flight computer on board the aircraft. These other input devices are not illustrated for simplicity. It is noted, however, that other inputs may be provided to the distributed architecture 10 of the present technology without departing from the scope thereof.

The distributed architecture 10 of the present technology is intended to be specific to the passengers and flight crew on an aircraft. As a result, the CPU 12 is contemplated to connect to at least two IO nodes: (1) a passenger IO node 20 and (2) a crew IO node 22. The passenger IO node 20 receives input and provides output to the passenger. The crew IO node 22 receives input and provides output to members of the flight crew. Both the passenger IO node 20 and the crew IO node 22 connect to the controller 16, through which selected inputs and outputs are directed.

The passenger IO node 20 is contemplated to encompass any suitable input/output device that may be available to a passenger. Similarly, the crew IO node 22 is intended to encompass any suitable input/output device that may be available to a member of the flight crew. In other words, while the present technology will be described in connection with specific devices, the present technology is not intended to be limited thereby. Other devices may be provide or substituted for the devices described herein without departing from the scope of the present technology.

In addition, as will be made more apparent in the discussion that follows, the passenger IO node 20 and the crew IO node 22 are contemplated to provide overlapping functionality. Therefore, the discussion of a particular functionality with respect to one IO node 20, 22 does not preclude the same functionality from being provided via the other of the IO nodes 20, 22.

As illustrated in Fig. 1, the various components of the distributed architecture 10 connect to one another via communication lines 24. The communication lines 24 may be wired or wireless communication lines, as should be apparent to those skilled in the art. Wired communication lines encompass, but are not limited to, wired connections and docking stations (for one or more of the IO nodes). Wireless communication lines may be provided via any suitable data format including, but not limited to, a Bluetooth™ connection (where appropriate).

Additionally, the communication lines are illustrated as two-way communication channels. While depicted as two-way communication channels, it is noted that one-way communication channels may be employed without departing from the scope of the present technology. In addition, it is also contemplated that the communication channels 24 may encompass one or more busses that channel multiple channels of communication along a single communication line 24.

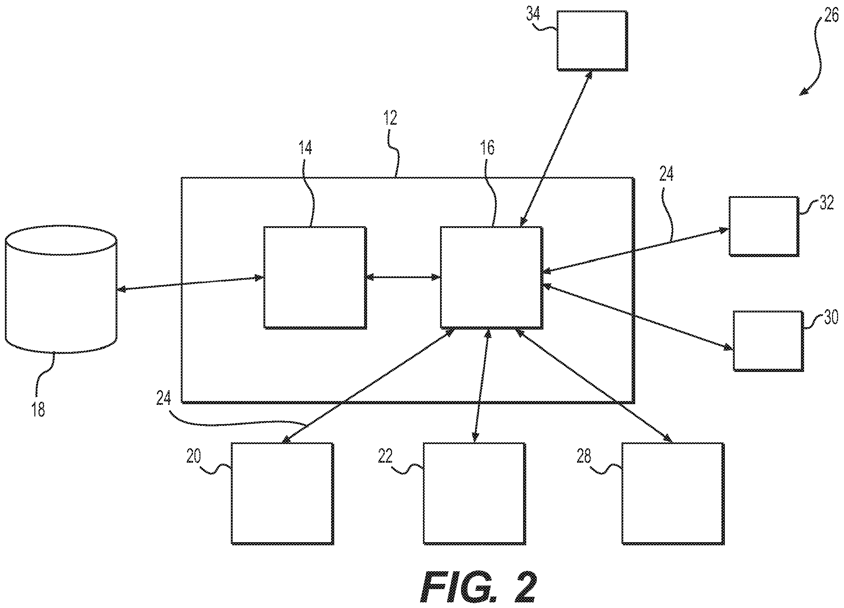

Fig. 2 illustrates a second embodiment of a distributed architecture 26 of the present technology. As will be made apparent from the discussion that follows, the second embodiment of the distributed architecture 26 may be considered as a variation of the first embodiment.

The distributed architecture 26 is directed to a location-oriented approach to the present technology rather than a person-oriented approach, as detailed in connection with the distributed architecture 10. The person-oriented approach that is employed for the distributed architecture 10 encompasses an architecture where an IO node is associated with an individual, such as a passenger or a member of the flight crew. The location-oriented approach for the distributed architecture 26 encompasses an architecture that relies, at least in part, on IO nodes that are placed at specific locations with the aircraft.

As will be made apparent in discussion that follows, there is an overlap between the first distributed architecture 10 and the second distributed architecture 26.

As illustrated in Fig. 2, the second distributed architecture 26 is similar to the first distributed architecture in that the distributed architecture 26 includes the CPU 12, the processor 14, the controller 16, and the database 18. The second distributed architecture 26 differs from the first distributed architecture 10 in that additional IO nodes are provided at specific locations within the aircraft cabin, as noted above.

As illustrated in Fig. 2, the second distributed architecture is contemplated to include the passenger IO node 20 and the crew IO node 22. In addition, the second distributed architecture 26 includes a bulkhead IO node 28, a side ledge IO node 30, a table IO node 32, and a window IO node 34. Details of the bulkhead IO node 28, the side ledge IO node 30, the table IO node 32, and the window IO node 34 are provided below. It is noted that the table IO node 32 and the window IO node 34 may be referred to solely as input nodes, since they are not contemplated to incorporate changeable output displays. However, as noted below, since the present technology does not preclude the table IO node 32 and/or the window IO node 34 from including variable displays, the table IO node 32 and the window IO node 34 are described both as IO and an input-only nodes.

As suggested by the nomenclature employed, the IO nodes 28, 30, 32, 34 are provided at specific locations in the aircraft. The person-specific IO nodes 20, 22 are contemplated to be portable devices that are associated with individuals and, as such, are not associated with any fixed structure within the aircraft.

As illustrated in Figs. 1 and 2, the IO nodes 20, 22, 28, 30, 32, 34 connect to the controller 16. The controller is contemplated to incorporate a hierarchical command structure that prioritizes input(s) from the different IO nodes 20, 22, 28, 30, 32, 34. For example, the controller 16 may include a hierarchical command structure where input(s) provided by a crew member override (or nullify) input(s) provided by a passenger. In another contemplated scenario, input(s) provided at one of the IO nodes 20, 22, 28, 30, 32, 34 may be given priority over any other input(s). For example, a crew member may have closed the window shades in the aircraft so that the passengers may enjoy in-flight entertainment. A passenger may wish to open his or her window shade via the window IO node 34. So that the passenger may do this, input(s) from the window IO node 34 may be placed at the top of the hierarchical command tree. Still further, the owner or operator of the aircraft may set the hierarchical command structure for the individual aircraft or a fleet of aircraft, as required or as desired.

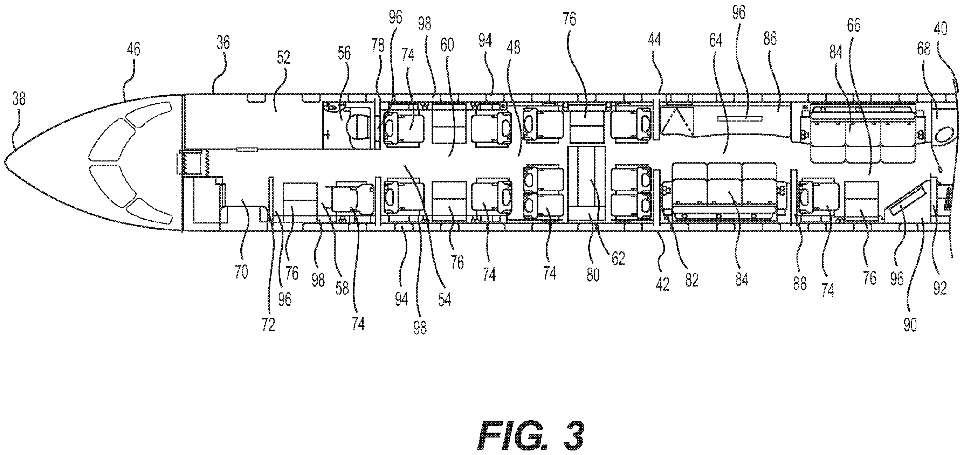

To facilitate the discussion of the distributed architectures 10, 26 of the present technology, a top view of an aircraft 36 is illustrated in Fig. 3. The aircraft 36 that is depicted is merely exemplary of the infinite possible configurations that are possible and should not be understood to be limiting of the present technology.

As illustrated in Fig. 3, the aircraft 36 has a front end 38, a rear end 40, a left side 42, and a right side 44. The fuselage 46 of the aircraft 36 defines a cabin 48 therein. The layout of the cabin 48 illustrated in Fig. 3 may be provided for a corporate, business, or personal aircraft, such as a private jet.

The cabin 48 includes a cockpit 50, a galley 52, and a passenger area 54. The cabin 48 also includes a forward lavatory 56, a first passenger seating area 58, a second passenger seating area 60, a third passenger seating area 62, a first bedroom 64, a second bedroom 66, and an aft lavatory 68.

The first passenger seating area 58 is positioned adjacent to the galley 52 and the forward lavatory 56. The first passenger seating area 58 is immediately aft of the door 70 that provides ingress into and egress out of the aircraft 36. A first bulkhead 72 separates the area adjacent to the door 70 from the first passenger seating area 58.

The first passenger seating area 58 is defined by one passenger seat 74 and a stowable table 76. The passenger seat 74 is contemplated to be a reclining seat. However, the passenger seat 74 need not recline for purposes of the present technology. The stowable table 76 is contemplated to be stowable in a side compartment adjacent to the passenger seat 74. As required by applicable aviation laws, the table 76 must be stowed for taxi, take-off, and landing. It is noted that the first passenger seating area 58 may be reserved for one or more crew members and, therefore, be understood to be a crew seating area 58. Since the type of individual that uses the seating area 58 is not critical to operation of the present technology, the seating area 58 will be referred to herein as the first passenger seating area 58. It is also noted that, while other seating areas are indicated as being for passengers, crew members may use these areas together with the passengers.

A second bulkhead 78 separates the first passenger seating area 58 and forward lavatory 56 from the second passenger seating area 60.

The second passenger seating area 60 includes four passenger seats 74 that are positioned on opposite sides of a central aisle. Two seats 74 face one another across a table 76 on the right side 44 of the aircraft 36. Similarly, two seats 74 face one another across a stowable table 76 on the left side 42 of the aircraft.

The third passenger seating area 62 is defined by six passenger seats 74, a stowable table 76, and a stowable conference table 80. Two seats 74 face one another across the stowable table 76 on the right ride 44 of the aircraft 36. Four seats 74 face one another (in two pairs) across a stowable conference table 78. As illustrated, when the tables 76, 80 are deployed, they are contemplated to form a single conference table that extends across the width of the cabin 48.

As is apparent from Fig. 3, the second seating area 60 and the third seating area 62 are not separated from one another by any bulkhead or other barrier. Instead, these passenger areas 58, 60 are contemplated to form a continuous passenger area within the cabin 48.

The first bedroom 64 is separated from the third passenger seating area 62 by a third bulkhead 82. The first bedroom 64 includes a divan 84 on the left side 42 of the aircraft 36 and a cabinet 86, such as a media cabinet, on the right side 44 of the cabin 48. It is contemplated that the divan 84 will function both as a couch (or a sofa) and a bed, depending upon its use or configuration.

The second bedroom 66 is separated from the first bedroom 64 by a fourth bulkhead 88. The second bedroom 66 includes a divan 84 on the right side 44 of the aircraft 36. A seat 74 and stowable table 76 are provided on the left side 42 of aircraft 36. Also on the left side 42 is a cabinet 90, which may be provided with a media center, including a monitor or a television.

A fifth bulkhead 92 separates the second bedroom 66 from the rear lavatory 68.

It is noted that the fuselage 46 includes a plurality of windows 94.

In addition, at least four monitors 96 *(i.e.,* video output screens) are provided in the aircraft 36 at various locations. The monitors 96 are contemplated to be positioned to provide video information and entertainment to the passengers in the aircraft 36. It is contemplated that entertainment also may be provided to the passengers via entertainment devices that are associated with the passenger seats 74.

As illustrated, the cabin 48 also includes several side ledges 98 that extend along the length of selected ones of the passenger seating areas 58, 60, 62. Where they are provided, the side ledges 98 are disposed between the passenger seat 74 and the wall of the fuselage 46. As is apparent from Fig. 3, the side ledges 98 are provided in the first passenger seating area 58 and the second passenger seating area 60. While side ledges 98 are not illustrated for the third passenger seating area 62, side ledges 98 may be provided in this seating area without departing from the scope of the present technology.

It is noted that the term "side ledge" is intended to encompass other furniture within the cabin 48 of the aircraft 36 in addition to the typical side ledge 98 that is identified in Fig. 3. Specifically, a cabinet or side ledge 98 may be provided adjacent to the divan 84 in the aircraft 36. While such a side ledge 98 would extend transversely to the travel direction of the aircraft 36, the side ledge 98 may be provided with control functionality. In addition, if the aircraft 36 were to include a bed with night stands, the night stands would be considered as side ledges 98 for purposes of the present technology.

As should be apparent to those skilled in the art, the configuration for the cabin 48 of the aircraft 36 that is provided in Fig. 3 is merely exemplary of the many possible configurations that may be employed in the cabin 48 of the aircraft 36. In other words, the present technology should not be understood to be limited to use on aircraft 36 with the configuration depicted in Fig. 3.

With renewed reference to the distributed architectures 10, 26 of the present technology, either architecture 10, 26 (or any variant thereof) may be employed onboard the aircraft 36. For purposes of the discussion herein, the aircraft 36 includes the second distributed architecture 26.

In this architecture, the passenger IO node 20 is contemplated to be a mobile electronic device, as discussed above. Mobile electronic devices include, but are not limited to, portable computers, tablets, and smartphones. As will be made apparent from the discussion that follows, it is contemplated that the passenger IO node 20 will be capable of receiving and storing a software program, such as an "app." The app may be specific to a particular aircraft or airline, as required or desired. The app is contemplated to provide the software needed for proper interface with the controller 16 for operation of the distributed architecture 26. In other words, the software resident on the passenger IO node 20 is contemplated to be configured to provide input to the CPU 12 and to receive output from the CPU 12.

The crew IO node 22 also is contemplated to be a mobile device, such as a laptop computer, tablet, or smartphone. As with the passenger IO node 20, the crew IO node 22 is contemplated to be provided with a suitable app (or resident software) for interface with the CPU 12.

Where the mobile IO nodes 20, 22 are tablets, it is contemplated that the tablets 20, 22 will be provided with the delivery to the customer of the aircraft 36. In this embodiment, when a passenger boards the aircraft 36, the passenger will be assigned one of the mobile devices for use during the flight.

Alternatively, it is contemplated that a passenger may bring his or her own mobile device on board the aircraft 36. If so, the passenger (and/or crew member) may be prompted to download suitable software *(i.e.,* the app) for interface with the controller 16 prior to boarding the aircraft. Similarly, the members of the flight crew may bring their own mobile devices on board the aircraft 36. If so, members of the flight crew also may be prompted to download suitable software on the personal device. In a further contemplated embodiment, the passenger (and/or crew member) may be prompted to download suitable software after boarding the aircraft, for example.

It is noted that the term "user" is employed to refer to passengers and flight crew members, since both categories of persons are contemplated to be users of the present technology. As such, where the term "passenger" or "flight crew member" are used, the term is not intended to exclude use by any other user, as required or as desired.

As also discussed above, the aircraft 36 may include additional IO nodes.

One of the IO nodes is the bulkhead IO node 28. The bulkhead IO node 28 is contemplated to be provided in selected bulkheads 72, 78, 82, 88, 92. As will be made apparent from the discussion that follows, the bulkhead IO node 28 provides access to several of the functions that are controllable within the cabin 48.

The side ledge IO node 30 is contemplated to be provided in the side ledges 98 adjacent to the passenger seats 74. The side ledge IO node 30 is contemplated to provide all or most of the functionality available through the passenger IO node 20. In one contemplated embodiment, the side ledge IO node 30 may be a tablet device that is incorporated into the side ledge 98 as a permanent part of the side ledge 98.

A window node 34 is contemplated to be provided in association with each window 94 in the aircraft 36.

It is noted that the window node 34 is referred to as a node and also as an IO node. While it is contemplated that the window node 34 will receive input only and, therefore, not include an output (or display) function, the window node 34 is not intended to be limited solely to receipt of input. It is contemplated that the window node 34 may incorporate a display that is changeable and, therefore, provides an output function. In addition, it is noted that the window node 34 includes a visible indication of up and down functions for the window shade associated therewith. While these indicators are not contemplated to change, they may be considered as output displays. In addition, it is contemplated that the window node 32 will enter into a sleep mode where the display becomes dark before being reawakened.

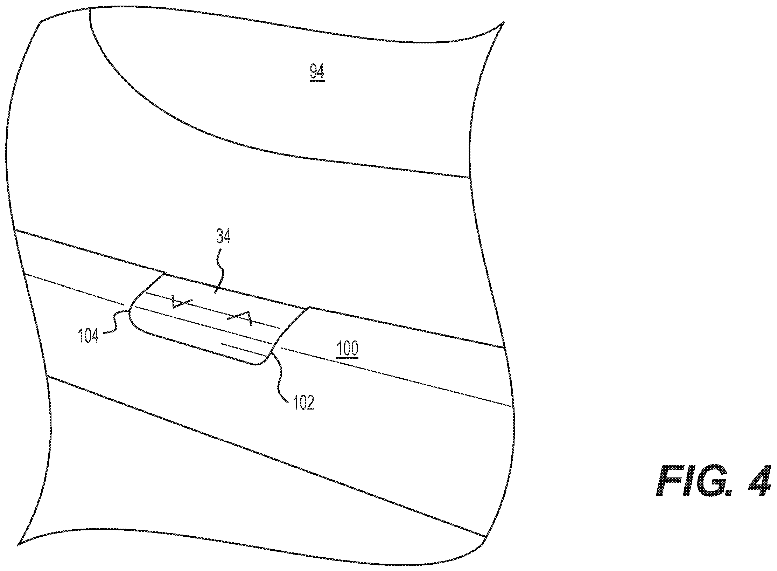

Fig. 4 is an enlarged, perspective view of one window node 34 that is considered for operation of the present technology. The window node 34 is positioned below the window 94, in a window frame 100. As should be apparent, the window node 34 may be placed in any position adjacent to the window 94 without departing from the scope of the present technology.

The window node 34 is contemplated to be a touch-sensitive panel. As a result, the window node 34 is not contemplated to include any moving components.

The window IO node 34 includes an up switch 102 and a down switch 104. Since the window node 34 is contemplated to be a touch-sensitive panel, the up switch 102 and down switch 104 are merely separate areas defined on the surface of the touch-sensitive panel. As should be apparent to those skilled in the art, the window node 34 need not be a touch-sensitive panel. Any other suitable switch may be employed for the window node 34 without departing from the scope of the present technology.

When a user touches the up switch 102 on the window IO node 34, a signal is generated that is sent to the controller 16. The controller 16 then issues a command to a motor associated with the shade in the window 94 to raise the shade until the passenger releases the up switch 102. The down switch 104 operates in a similar manner.

In an alternative embodiment, it is contemplated that the window IO node 34 will connect directly to a motor that operates the position of the shade for the window 94. In this alternative arrangement, the operation of the window shade will be possible via suitable commands from the CPU 12. For example, a member of the flight crew may choose (via the crew IO node 22) to lower all of the window shades in the aircraft 36 to facilitate viewing of one or more entertainment programs.

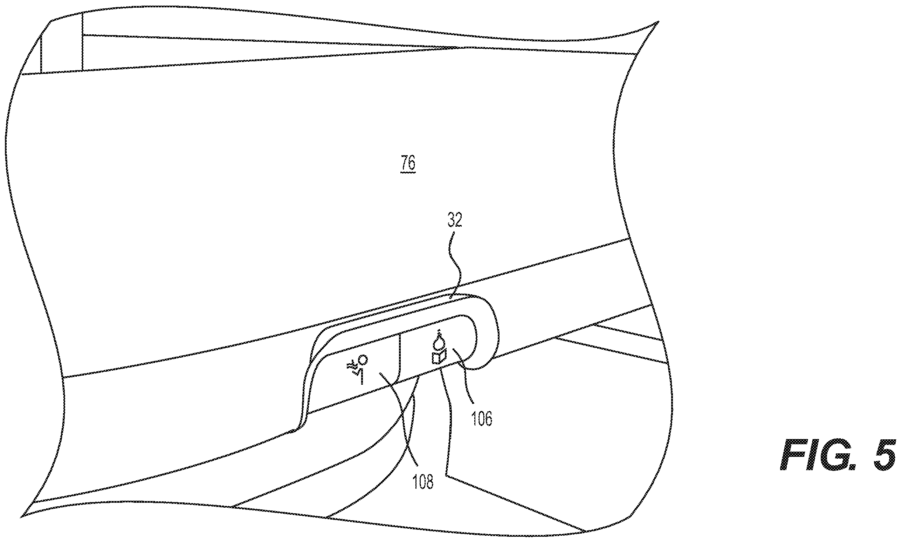

Fig. 5 is a perspective illustration of the table node 32. The table node 32 is contemplated to be provided in an edge of a table, such as the stowable table 76 or the stowable conference table 78. As with the window node 34, the table node 32 is contemplated to be a touch-sensitive panel.

As with the window IO node 34, the table node 32 is contemplated to be an input only node. However, the present technology should not be understood to limit the table node 32 solely to input only. It is possible that the table node 32 may include a changeable display. Moreover, it is also noted that the table node 32 is contemplated to have a fixed, illuminated display or output. As with the window node 34, it is contemplated that the table node 32 will enter into a sleep mode where the display becomes dark before being reawakened.

The table node 32 includes two separate switch regions. The first switch region is an overhead light switch 106. The second switch region is a flight attendant call button 108.

When a passenger touches the overhead light switch 106, a signal is sent to the controller 16. The controller 16 then sends a signal to the overhead light to turn on or off, as appropriate. Alternatively, the overhead light switch 106 may connect directly to the overhead light. In this alternative embodiment, it is contemplated that the CPU 12 also will connect to the overhead light so that control of the overhead light is made possible through one or more of the remaining IO nodes 20-34, as appropriate.

It is noted that there are three types of lighting that may be controllable within the aircraft 36: (1) a reading (or overhead) light, (2) a table light, and (3) a cabin light. A reading light is considered to be local to the passenger's seat 74 and to provide specific illumination from a position above the passenger's seat 74. The table light is contemplated to be provided above a stowable table 76 or a conference table 80, as discussed in connection with the cabin 48 of the aircraft 36. The cabin lights are intended to refer to the lights that are located in the dome above the aircraft cabin 48.

With these definitions in mind, it is contemplated that the light switch 106 will provide control over the operation of the table light. This is a logical choice since the table node 32 is embedded in the edge of the surface of the table 76, 80. It is contemplated, however, that the table node 32 may provide control over the reading light and/or the cabin lights, as required or as desired.

It is noted that the window IO node 34 and the table IO node 32 are but two examples of nodes where limited space is available for control inputs and/or outputs. The present technology should not be understood to be limited to the nodes 32, 34 that are shown and described herein.

Returning to Fig. 5, when a passenger touches the flight attendant call button 108, a signal is sent to the controller 16. The controller 16 then generates a signal that is transmitted to a flight attendant, for example. In this embodiment, it is contemplated that the call button will trigger a notification that may appear on the display of the crew IO node 22. Alternatively, a panel may be provided in the galley 52 to notify a flight attendant that a passenger is in need of assistance.

If a flight attendant receives notification of receipt of a flight attendant call, the flight attendant may respond by addressing the passenger in the seat 74 from which the call signal originated.

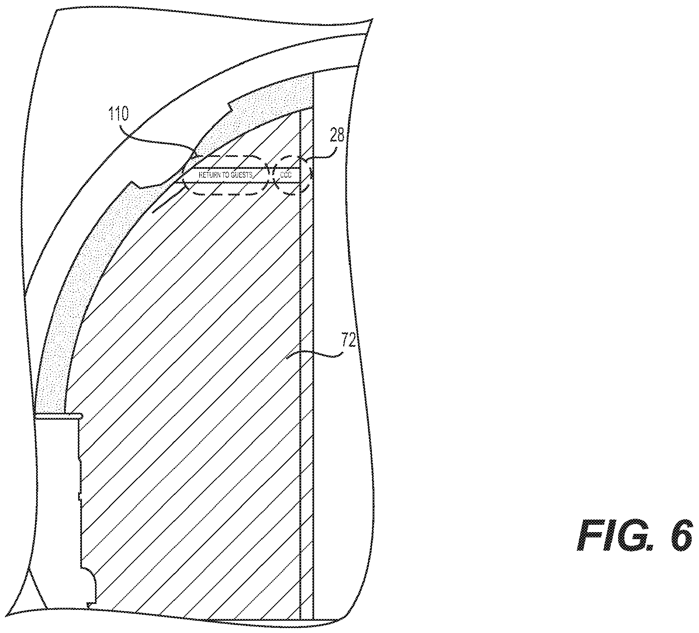

Fig. 6 is a graphical illustration of one contemplated design for the first bulkhead 72. The same design is anticipated to be incorporated into the remaining bulkheads, as required or as desired.

The first bulkhead 72 is a wall. A notice display area 110 is provided in the bulkhead 72 to convey specific information, such as "fasten seat belts." The bulkhead IO node 28 is contemplated to be positioned adjacent to the notice display area 110. Preferably, the bulkhead IO node 28 is positioned closer to the aisle than the notice display area 110. When positioned in this location, a person is unlikely to obstruct the displayed notice when manipulating the controls provided via the bulkhead IO node 28.

The bulkhead IO node 28 is contemplated to be a touch-sensitive display panel, similar to a tablet or smartphone device. Unlike the window IO node 34 or the table IO node 32, whose displays are contemplated to remain unchanged, the bulkhead IO node 28 is contemplated to change its display information depending upon the icon selected by the passenger or flight crew. In addition, the bulkhead IO node 28 is contemplated to be positioned at a suitable height, so that the passengers are able to read the information displayed thereon.

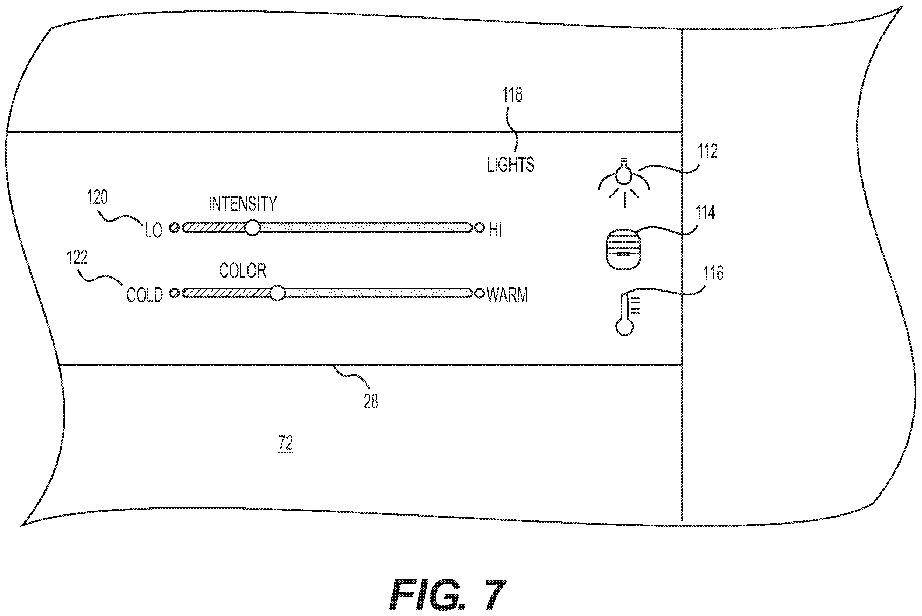

An enlarged detail of one contemplated embodiment of the bulkhead IO node 28 is provided in Fig. 7. In this illustration, the bulkhead IO node 28 is installed in the first bulkhead 72.

The bulkhead IO node 28 is contemplated to provide input for control of the cabin lights, the degree to which the window shades are open, and the temperature within the area of the cabin 48 immediately adjacent thereto. As a result, the bulkhead IO node 28 includes three icons: (1) a cabin light icon 112, (2) a window shade icon 114, and (3) a thermostat icon 116. When a person touches any one of the three icons, the bulkhead IO node 28 displays the control information suitable for the selected one of the three menu options. Fig. 7 illustrates the light menu, as indicated by the menu title 118 displayed thereon.

It is noted that the bulkhead IO node 28 need not be limited such that it provides control access to the cabin lights, the window shades, and/or the temperature within the cabin 48 of the aircraft 36. To the contrary, it is contemplated that the bulkhead IO node 28 may provide additional functionality, as desired or as required.

In the illustrated embodiment, the light menu 118 provides two options to permit a person to alter the lighting in the cabin 48. The first icon is an intensity control bar 120. The second is the color control bar 122. In this contemplated embodiment, the control bars 120, 122 are disposed in a horizontal orientation. As should be apparent, the control bars 120, 122 may be vertically oriented without departing from the scope of the present technology. Moreover, a control bars 120, 122 may be displayed in a tilted orientation, as desired.

When a person touches the bulkhead IO node 28 after having selected the cabin light icon 112, the display for the bulkhead IO node 28 changes to display the control bars 120, 122. The user may then touch the surface of the bulkhead IO node 28 to alter one or both of the displayed lighting parameters.

As the user slides his or her finger along the intensity control bar 120, for example, the brightness of the lights changes. It is contemplated that the intensity of the cabin lights may be expressed in terms of lumens, watts, and/or a percentage value between a minimum predetermined intensity *(i.e.,* 0 % illumination) and a maximum predetermined intensity *(i.e.,* 100 % illumination). Alternatively, the user need not slide his or her fingers along one of the control bars 120, 122 to provide input for the cabin light intensity. It is contemplated that the user may simply tap on the surface of the bulkhead IO node 34 to effectuate such a change.

Similarly, as the person slides his or her fingers along the color control bar 122, the color of the lights in the cabin changes between cool and warm. As should be apparent to those skilled in the art, color change lights are becoming more commonly used, especially since light emitting diodes ("LEDs") are commonly manufactured so that the color of the bulbs may be altered.

"Warm" light is light that includes a predominance of yellow and red hues. "Cool" light includes a predominance of blue hues. As should be apparent to those skilled in the art, the color control bar 122 may be programmed to permit adjustment between a predetermined warm color and a predetermined cool color.

In an alternative embodiment, it is contemplated that the color control bar 122 may include three separate control bars, one each for the red, green, and blue ("RGB") components of the light. In this contemplated embodiment, it is contemplated that the user may select a saturation level for each of the RGB components of the light. In this manner, the user may have a much greater degree of control over the color of the lights in the cabin 48 of the aircraft 36.

Next, as discussed in greater detail below, it is contemplated that control over the lighting in the cabin 48 of the aircraft 36 may encompass the entire cabin 48, a zone within the cabin 48, or a local area immediately adjacent to the passenger's seat 74. A zone includes a subset of the entire cabin 48. Zone and localized control also are contemplated to be available for all of the controllable parameters that are available within the cabin 48 of the aircraft 36.

As noted above, when a person accesses the bulkhead IO node 28, signals are sent to the controller 16. The controller 16 then sends appropriate signals to the devices (such as the cabin lights) on the aircraft 36 in response to the input. Specifically, the cabin lights are adjusted consistently with the input received from the user.

When the window shade icon 114 is touched and the window shade menu appears, the person accessing the menu may adjust the opened condition of one or more of the window shades in the cabin. The window shades are contemplated to be adjustable between a predetermined minimum *(i.e.,* 0 % opened) to a predetermined maximum *(i.e.,* 100 % opened).

When a person accesses the thermostat icon 116, the person is provided with a suitable icon to adjust the temperature within the cabin 48. It is contemplated that the temperature will be adjustable to within 5-10 °C of standard ambient, which is 25 °C. In other words, it is contemplated that the temperature will be adjustable between a predetermined minimum of 15 °C and a predetermined maximum of 35 °C. Of course, any other predetermined range may be employed without departing from the scope of the present technology.

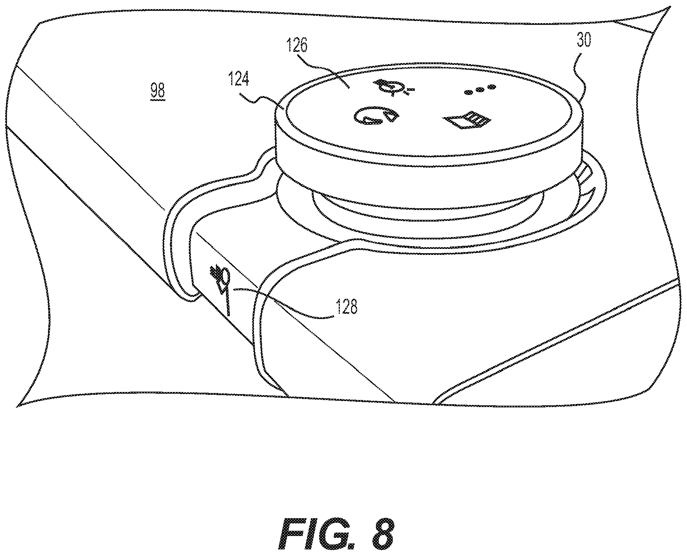

Fig. 8 is a perspective illustration of one contemplated embodiment of the side ledge IO node 30. The side ledge IO node 30 is contemplated to combine the tactile input of a knob 124 together with a touch-sensitive top surface and display 126. A flight attendant call button 128 is provided adjacent to the side ledge IO node, as shown. The flight attendant call button 128 need not be provided to practice the present technology.

The side ledge IO node 30 is contemplated to provide at least the same control functionality as the bulkhead IO node 28. In addition, the side ledge IO node 30 is contemplated to provide control over many of the same functions as the passenger IO node 20, which is described in greater detail in the paragraphs that follow.

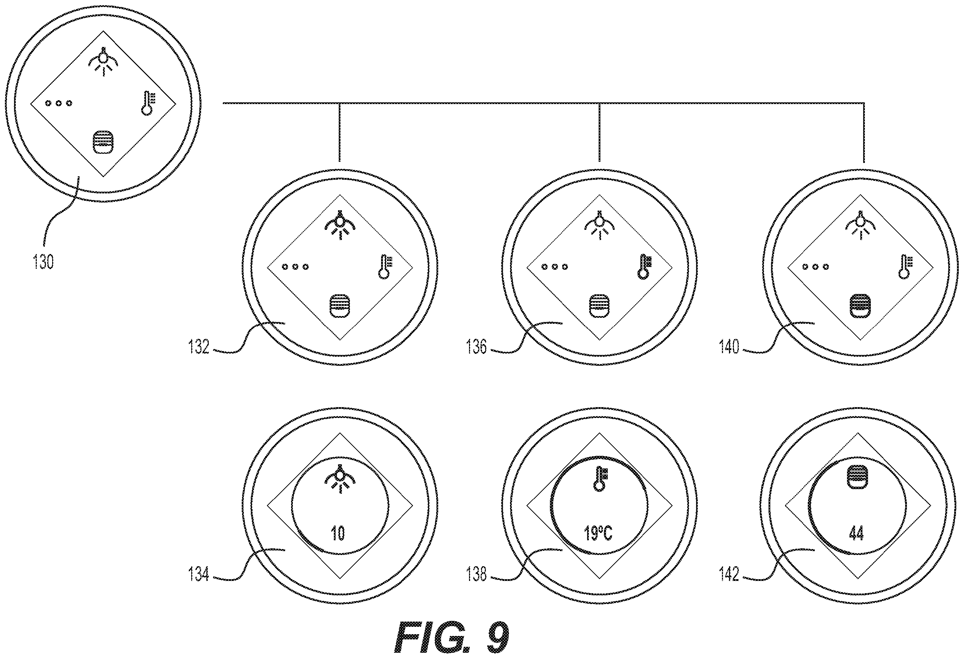

Fig. 9 provides a simple tree diagram that illustrates the functioning of the side ledge IO node 30. When activated initially, the knob 124 displays a main menu 130. The main menu includes a light control icon 112, a window shade icon 114, and a thermostat icon 116. When the light control icon 112 is accessed, as illustrated in the menu 132, the user may turn the knob 124 to adjust the intensity of the light in the cabin 48, as shown by the intensity display 134 *(i.e.,* 10 % of maximum). When the thermostat icon 116 is touched, as shown in the thermostat menu 136, the user may turn the knob 124 to change the temperature, as shown in the temperature display 138 *(i.e.,* 19 °C). When the user accesses the window shade icon 114, as shown in the window shade menu 140, the user may turn the knob 124 to change the degree to which the shade is opened (*i.e.* 40 % of maximum).

As before, each input provided by the user is transmitted first to the controller 16 before a control signal is transmitted to the appropriate component responsible for the particular cabin function.

In addition, it is contemplated that the side ledge IO node 30 will provide access to other functions, such as volume control for the media being played. Also, the side ledge IO node 30 may provide access to various menus for selecting media content.

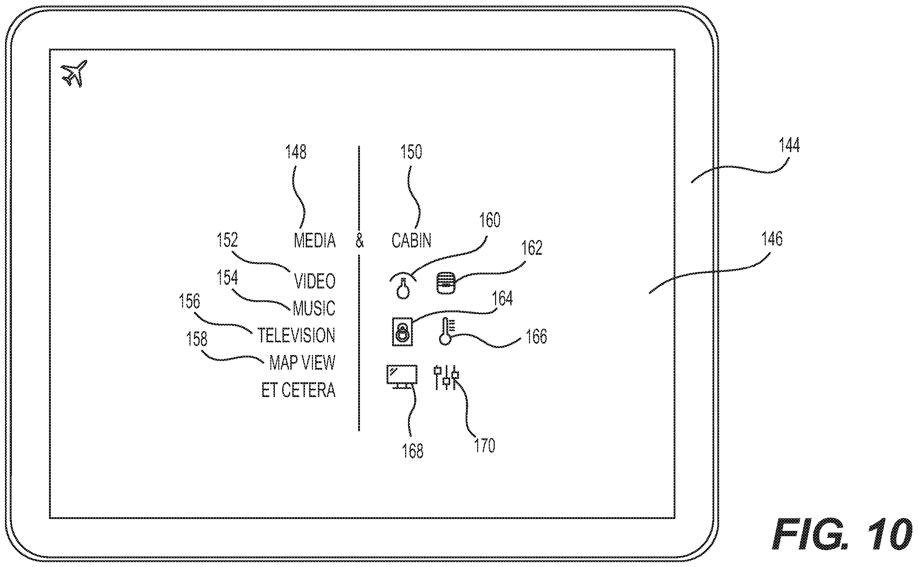

Fig. 10 illustrates an interface contemplated for the passenger IO node 20. As noted above, the passenger IO node 20 is contemplated to be embodied in a mobile computing device such as a personal computer, tablet, and/or smartphone. As should be apparent, other electronic devices may be employed without departing from the scope of the present technology. In the embodiment illustrated in Fig. 10, the electronic device is a tablet 144 with an interactive, touch screen surface 146.

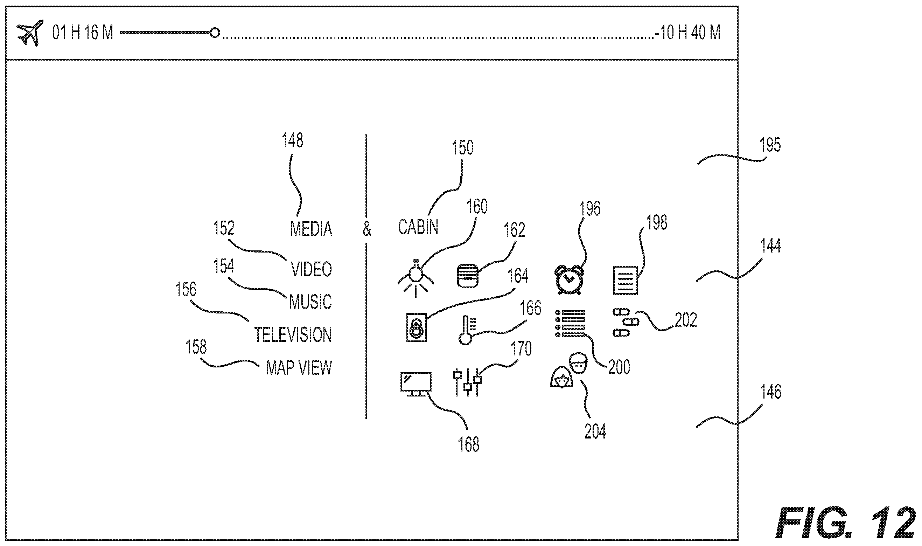

Similarly, Fig. 12 illustrates an interface contemplated for the crew IO node 22. As noted above, the crew IO node 22 is contemplated to be embodied in a mobile computing device such as a personal computer, tablet, and/or smartphone. As should be apparent, other electronic devices may be employed without departing from the scope of the present technology. In the embodiment illustrated in Fig. 12, the electronic device is a tablet 144 with an interactive, touch screen surface 146. The same reference numbers are used for the tablet 144 for the passenger IO node 20 and the crew IO node 122, because both are contemplated to be tablets 144, with the distinguishing characteristic being the software operating thereon.

The passenger IO node 20 is contemplated to provide access to two separate categories of functions: (1) a media functions menu 148 and (2) a cabin functions menu 150.

Media functions include, but are not limited to, features associated with: (1) a video icon 152, (2) a music icon 154, (3) a television icon 156, and (4) a map view icon 158. The Video icon 152 provides access to functions that include, but are not limited to, a library of video programs that are accessible to the user from the database 18. The audio icon 154 provides access to audio functions that include a library of audio programs that are available to the user. The television icon 156 provides access to television functions that include a library of television programs that are available to the user. Television programs also may include television channels that are made available for those aircraft 36 equipped to receive television programming in real time *(i.e.,* via satellite). The map view icon 158 provides access to features that may include a global map view that permits the user to identify where the aircraft 36 is in relation to the surface of the Earth. In addition, a local map view function, with associated interactive features, may permit the user to access information about the user's destination location, for example. As should be apparent, the media functions menu 148 may include other functions without departing from the scope of the present technology.

Cabin functions include, but are not limited to, features associated with: (1) a cabin light icon 160, (2) a window shade icon 162, (3) an audio icon 164, (4) a thermostat icon 166, (5) a video icon 168, and (6) a presets icon 170. The cabin light icon 160 provides access to control over the cabin lights, as discussed above. The cabin light icon 160 also may provide access to other lighting in the cabin 48 of the aircraft 36. The window shade icon 162 provides access to control over one or more of the window shades in the cabin 48. The audio icon 164 is duplicative of the audio icon 154 discussed in connection with the media menu 148. The thermostat icon 166 provides access to controls over the temperature within all or part of the cabin 48 of the aircraft 36. The video icon 168 provides access to video programming, as discussed above with respect to the media menu 148. The presets icon 170 provides access to selected, preset conditions for the cabin 48 of the aircraft. One preset may be a "sleep" control that dims the lights and closes the window shades at least in the immediate vicinity of the user.

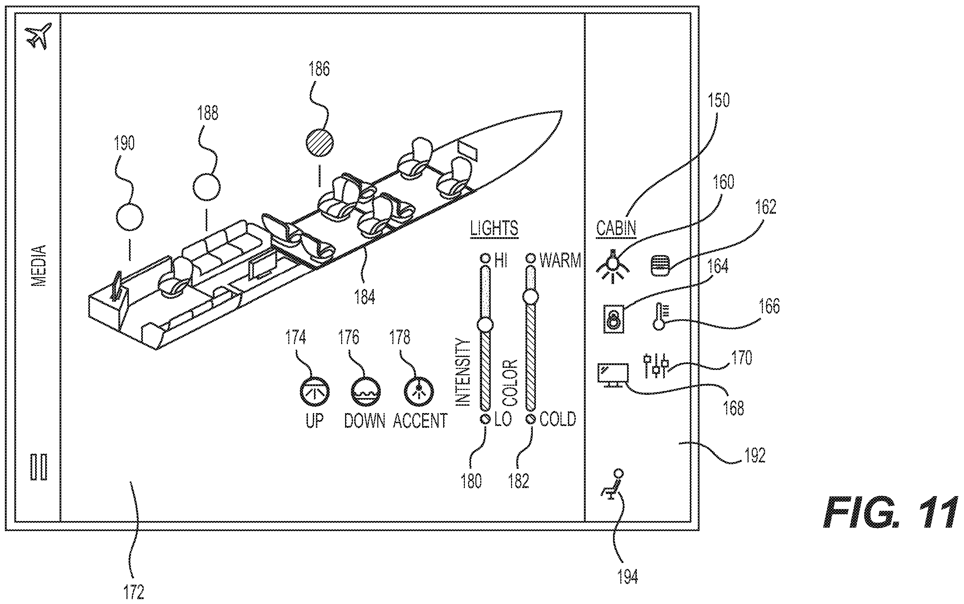

Fig. 11 is one contemplated lights GUI 172 for control over the lights in the cabin 48. The lights GUI 172 includes a window shades up icon 174, a window shades down icon 176, an accent light icon 178 (for access to controls of a reading light, for example), a light intensity control bar 180, and a light color control bar 182.

The lights GUI 172 also includes an isometric cabin GUI 184 that illustrates a portion of the cabin 48 of the aircraft 36. With respect to the isometric cabin GUI 184, three control areas 186, 188, 190 are selectable so that the user may control the lights in the selected section of the aircraft 36.

While the lights GUI 172 is illustrated, the same approach may be taken for any of the features that are controllable within the aircraft 36. For example, the window shades icon 162 is contemplated to access an isometric cabin GUI 184 permitting control over one or more of the window shades in the cabin 48 of the aircraft. This includes control over media and media volume, the location in the cabin 48 where the media is to be played, etc.

With respect to the window shades, it is noted that the window shades may be of any particular type without departing from the scope of the present technology. For example, the window shades may be made from a sheet of material that moves (via a motor, for example) in front of the window to block the transmission of light therethrough. Alternatively, the window shades may be made from an electrochromic material. Electrochromic materials respond to signals by altering their color and/or opacity.

In yet some alternative of the present technology, the window shades may be made from a combination of (1) a first window shade made from a sheet of material and (2) a second window shade made from an electrochromic material. The first window shade may be disposed between two window panels of a cabin window and the second window shade may be disposed inwardly in front of the first window shade. Other arrangement may also be envisioned and are therefore not limitative. In such embodiment, the first window shade and the second window shade may be controlled independently, for example via the controller 16. As a result, a user (who may be a passenger or a crew member) may increase opacity of the second window shade while not modifying a position of the first window shade and vice-versa. In some alternative embodiments, both the first window shade and the second window shade may be controlled in a coordinated fashion so that the opacity of the second window shade varies as the position of the first window shade is modified.

In some embodiments of the present technology, both the first window shade and the second shade may be controlled by at least one of the passenger IO node 20, the crew IO node 22, the bulkhead IO node 28, the sideledge IO node 30, the table IO node 32 and the window IO node 34. In some embodiments, the window IO node 34 may include two independent control interface components so as to independently control each one of the first window shade and the second window shade. In some embodiments, the window IO node 34 is designed to have a control interface component for controlling both the first window shade and the second window shade in a coordinated fashion. In such embodiment, when starting from a position in which the first window shade is fully open and the second window shade is transparent, and a user issues a first command to at least partially close the window shades, the window IO node 34 and/or the controller 16 may embody a control method, which upon execution, causes, , an increase in the opacity of the second window shade while not (or slightly) modifying a position of the first window shade. A second command (automatically or manually) issued by the user to fully close the window shades results in an increase of the opacity to a maximum level. Upon reaching the maximum level or slightly before, the position of the first window shade moves from an open (or partially open) position to a fully closed position. As such, the first and second window shades are controlled in a coordinated sequence. In an alternative, the opacity of the second window shade and the position of the first window shade may be controlled in a coordinated and quasi-proportional manner, such that as the position of the first window shade is lowered, the second window shade increases in opacity.

Conversely, when starting from a closed position in which the first window shade is fully closed and the second window shade is at a maximum level of opacity, and a user issues a first command to at least partially open the window shades, the control method may cause, modifying a position of the first window shade while not (or slightly) decreasing the opacity of the second window shade. A second command (automatically or manually) issued by the user to fully open the window shades results in fully opening the first window shade. Upon reaching the fully open position of the first window shade or slightly before, the level of opacity of the second window shade is decreased to its minimum level. Other variations of the control method may also be envisioned without departing from the scope of the invention.

Fig. 11 also illustrates a side menu bar 192, which provides the cabin menu 150. In the side bar menu 192 also includes a seat icon 194 that provides control over the reclinability (among other adjustable features) of the passenger's seat 74.

Fig. 12 provides one contemplated crew display 195 display for the flight crew IO node 22. The crew display 185 provides additional functionality for crew members. Specifically, the crew display 195 includes: (1) a scheduling icon 196, (2) a notes icon 198, (3) a report icon 200, (4) a controls icon 202, and (5) a passenger manifest icon 204. The scheduling icon 196 is contemplated to provide access to scheduling functions, such as when a movie is to be played or when a meal is to be served. The notes icon 198 is contemplated to provide a pad on which the crew member may enter items of information that are pertinent to aspects of a particular flight. The report icon 200 is contemplated to provide, for example, a sunning inventory of the supplies on board the aircraft 36. When this function is accessed, the flight crew member may be able to determine if additional coffee is needed for the galley, for example. The controls icon 202 is contemplated to provide control over aspects of the operation of the cabin 48 of the aircraft. For example, this icon may provide access to controls for a water heater on the aircraft 36, permitting the crew member to adjust the temperature of the hot water dispensed therefrom.

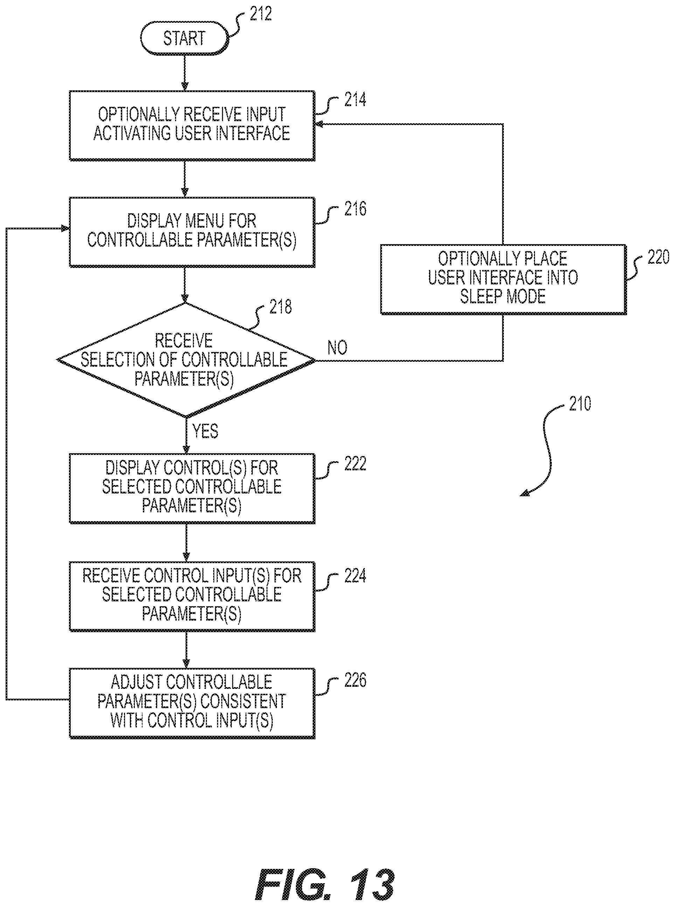

Fig. 13 illustrates one contemplated method 210 that is considered for operation of the distributed architecture 10, 26 of the present technology. The method 210 is considered to be generic to the operation of the any of the IO nodes of the present technology.

The method 210 begins at step 212. The method 210 proceeds to step 214 where the method optionally receives input activating the user interface associated with the IO node.

It is contemplated that the IO node might not provide any display until activated. A passenger or crew member may activate the IO node by touching the touch-sensitive surface thereof. Alternatively, a switch may be provided to turn on or turn off the IO node.

Separately, it is contemplated that the IO node may operate such that the node remains in a constant on mode of operation. In this contemplated mode of operation, the IO node is contemplated to provide a display at all times during flight.

From optional step 214, the method 210 proceeds to step 216, where a menu for controllable parameters is displayed. The menu includes, but is not limited to, a display of the cabin light icon 160, the window shade icon 162, and the thermostat icon 166. As discussed above, each of these icons is associated with a controllable parameter on board the aircraft 36.

The method 210 then proceeds to step 218, where a selection of one of the controllable parameters is received by the method 210. As noted above, the input may be received when a person taps on a particular icon 160, 162, 166. In an alternative contemplated operation, the user may use a swiping motion to access the menus associated with the icons 160, 162, 166. Specifically, the user may use a swiping motion, by dragging his or her finger across the surface of the tablet 144, to navigate through the different menus associated with each of the icons 160, 162, 166.

If no input is received at step 218, the method 210 proceeds to an optional step 220 where the bulkhead IO node 28 is placed into a sleep mode. In the sleep mode, the IO node may go dark. Alternatively, it may continue to display the screen last selected by a user. In still another embodiment, the IO node may default to the main menu.

If the user selects one of the controllable parameters by selecting one of the icons 160, 162, 166, the method 210 proceeds to step 222. At step 222, the method 210 displays the controls appropriate for the selected controllable parameter. For example, if the cabin light icon 160 is selected, the light intensity control bar 180 and the color control bar 182 may be displayed.

Once the control(s) are displayed, the method 210 proceeds to step 224. At step 224, the method receives control input(s) from the user to adjust one or more of the controllable parameters in the cabin 48 of the aircraft 36.

After receiving the input at step 224, the method 210 proceeds to step 226, where the selected, controllable parameters are adjusted according to the input provided by the user.

After step 226, the method 210 is contemplated to return to step 216 and display the main menu.

As noted above, it is contemplated that the IO node will operate after being awakened by a person's touch. In keeping with this mode of operation, it is contemplated that the IO node will enter into a sleep mode (or go dark) after the expiry of a predetermined time period. For example, if the IO node has not received tactile input for a period of two (2) minutes, the IO node will be instructed to enter into the sleep mode where it will await the next command.

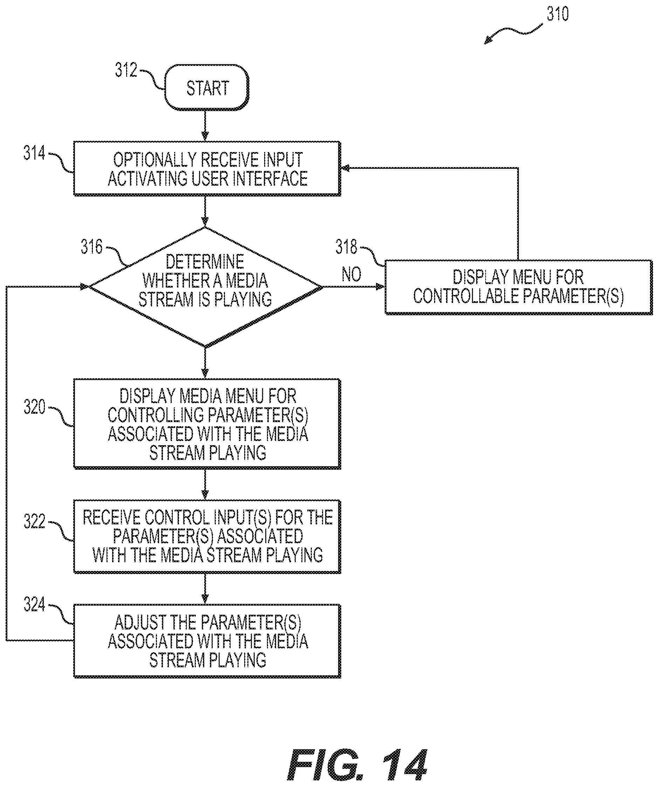

Fig. 14 illustrates another contemplated method 310 that is considered for operation of the distributed architecture 10, 26 of the present technology. The method 310 is considered to be generic to the operation of any of the IO nodes of the present technology.

The method 310 begins at step 312. The method proceeds to step 314 by receiving, by at least one of an IO node connected to the distributed architecture, a first input from a user for activating a graphical user interface component. The step 314 may be optional. In some embodiments, the IO node is at least one of a passenger IO node and a crew IO node.

The method 310 then proceeds to step 316 by determining if a media stream is playing on at least one system at least partially controllable via the distributed architecture. In some embodiments, the system is different from the IO node. In some embodiments, the system may be an audio system which may comprise one or more speakers positioned at various locations of the aircraft cabin. The system may also be a video system which may comprise one or more display screen of projection devices located at various locations of the aircraft cabin. If the method 310 determines that the media stream is playing, the method 310 then proceeds to step 320.

At step 320, the method 310 causes displaying, on the IO node, a media control menu allowing modification of a media parameter associated with the media stream via a second input from the user on the IO node, the second input being a direct input from the user.

At step 322, the method 310 proceeds to receiving a control input for the media parameter associated with the media stream.

At step 324, the method 310 proceeds to adjusting the media parameter associated with the media stream playing.

If the method 310 determines, at step 316, that no media stream is playing, the method 310 then proceeds to step 318. At step 318, the method 310 proceeds to displaying, on the IO node, a non-media menu allowing selection of a parameter associated with a controllable function via a third input from the user on the IO node, the parameter being different from the media parameter associated with the media stream.

In some embodiments, the media stream is at least one of an audio stream and a video stream. In some embodiments, the at least one system is at least one of the passenger IO node and the crew IO node. In some embodiments, the direct input allows modifying the media parameter without requiring the user to navigate through a sub-menu associated with one of the media-menu and the non-media menu. In some embodiments, the media parameter is at least one of an audio volume, a pause control, a stop control, a fast forward control, a rewind control, a skip next control and a skip back control. In some embodiments, the media menu comprises a set of visual icons representing at least one of an audio volume, a pause control, a stop control, a fast forward control, a rewind control, a skip next control and a skip back control. In some embodiments, the non-media menu comprises a set of visual icons allowing control of functions of the aircraft cabin, other than the media functions, such as, but not limited to a sub-menu for controlling the window shades, the light and/or the temperature of the aircraft cabin. The non-media menu may also comprise a sub-menu for controlling media functions. In such embodiments, the user would first have to select the sub-menu before being able to input a control command relating to a media stream.

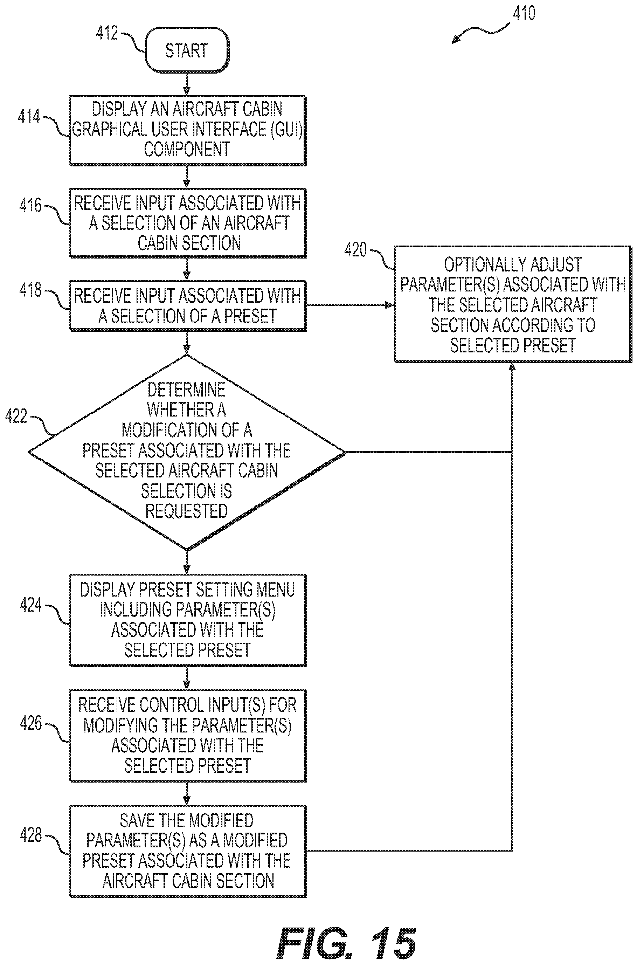

Fig. 15 illustrates another contemplated method 410 that is considered for operation of the distributed architecture 10, 26 of the present technology. The method 410 is considered to be generic to the operation of any of the IO nodes of the present technology.

The method 410 begins at step 412. The method proceeds to step 414 by displaying, on an IO node, a graphical user interface component representing at least a portion of an aircraft cabin divided into at least two aircraft cabin sections. In some embodiments, the IO node is at least one of a passenger IO node and a crew IO node.

The method 410 then proceeds to step 416 by receiving, by the IO node, a first input from a user for selecting one of the at least two aircraft cabin sections. Then, at step 418, the method 410 proceeds to receiving, by the IO node, a second input from the user for selecting the preset of the at least one controllable parameter.

At step 422, the method 410 then determines if a modification of the selected preset for the selected aircraft cabin section is requested by the user. If so, then the method 410 proceeds to step 424 by displaying, on the IO node, a preset setting menu including the at least one controllable parameter associated with the selected preset, the at least one controllable parameter allowing modification of at least one of the functions of the aircraft cabin for the selected aircraft cabin section.

The method 410 then proceeds to step 426 by receiving, by the IO node, a third input from the user for modifying the at least one controllable parameter. The step 426 also comprises generating a modified preset based on the modified at least one controllable parameter.

The method 410 then proceeds to step 428 by saving the modified preset, for example in a memory associated with the IO node and/or the distributed architecture.

In some embodiments, the method 410 may also comprise adjusting, by a controller associated with the distributed architecture, the selected aircraft cabin section in accordance with the modified preset.

In some embodiments, the at least one controllable parameter comprises at least one of light intensity, light, color, temperature and a degree of openness of a window shade. In some embodiments, the at least one controllable parameter comprises a first controllable parameter associated with a light intensity, a second controllable parameter associated with a light color and a third controllable parameter associated with a degree of openness of a window shade. In some embodiments, the preset menu comprises a first group of graphical user interface (GUI) components allowing modification of the first controllable parameter, a second group of GUI components allowing modification of the second controllable parameter and a third group of GUI components allowing modification of the third controllable parameter.

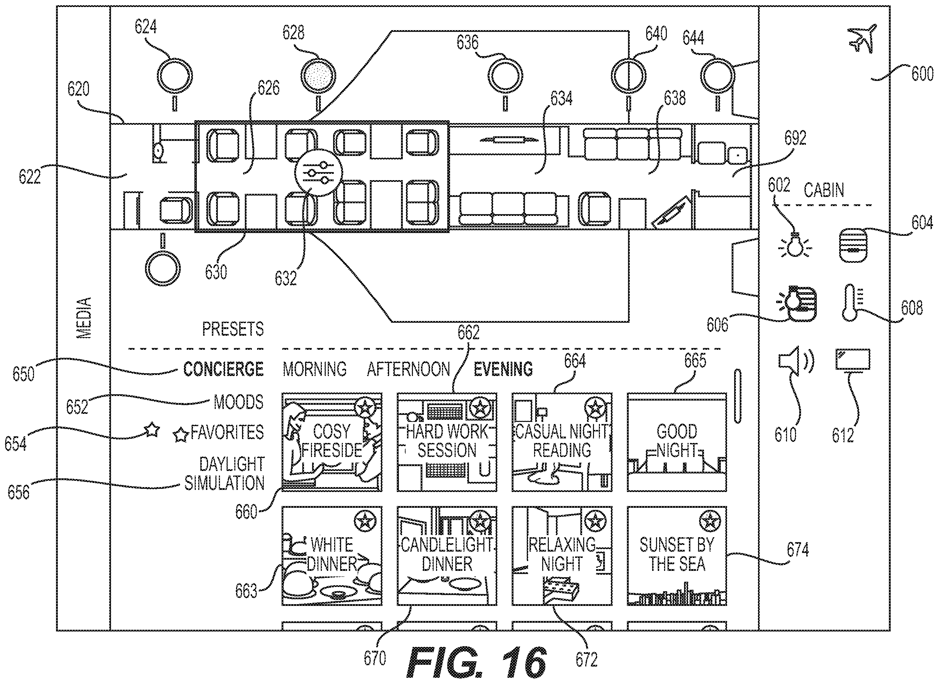

Turning now to Fig. 16, a screen 600 to be displayed on an IO node is illustrated. In some embodiments, the IO node is at least one of a passenger IO node and a crew IO node. The screen 600 comprises a set of icons 602, 604, 606, 608, 610 and 612 for controlling various functions of the aircraft cabin, including non-media functions (for example, via the icons 602, 604, 606 and 608) and media functions (for example via the icons 610 and 612). The screen 600 also comprises a graphical user interface component 620 representing a portion of an aircraft cabin divided into a plurality of aircraft sections. In the example of Fig. 16, the plurality of aircraft cabin sections comprises a first aircraft cabin section 622 associated with a first icon 624, a second aircraft cabin section 626 associated with a second icon 628, a third aircraft cabin section 634 associated with a third icon 636, a fourth aircraft cabin section 638 associated with a fourth icon 640 and a fifth aircraft cabin section 692 associated with a fifth icon 644. The screen 600 also comprises a visual selector 630 allowing identifying a selected section of the aircraft cabin, in this example, the second aircraft cabin section 626. The visual selector 630 comprises a configuration icon 632 allowing triggering, by a user, a preset modification sequence. The configuration icon 632 is an example as to how the user may request modification of a selected preset. Other variations may be envisioned without departing from the scope of the present technology.

The screen 600 also comprises a plurality of categories for regrouping presets of controllable parameters of the aircraft cabin. The plurality of categories comprises a first category 650 entitled "CONCIERGE", a second category 652 entitled "MOODS", a third category 654 entitled "FAVORITES" and a fourth category 656 entitled "DAYLIGHT SIMULATION" . In the example of Fig. 16, the first category 650 has been previously selected which has caused a plurality of icons representing presets to be displayed. The presets comprise a first preset 660 entitled "COSY FIRESIDE", a second preset 662 entitled "HARD WORK SESSION", a third preset 664 entitled "CASUAL NIGHT READING", a fourth preset 665 entitled "GOOD NIGHT", a fifth preset 663 entitled "WHITE DINNER", a sixth preset 670 entitled "CANDLELIGHT DINNER", a seventh preset 672 entitled "RELAXING NIGHT" and an eight preset 674 entitled "SUNSET BY THE SEA".

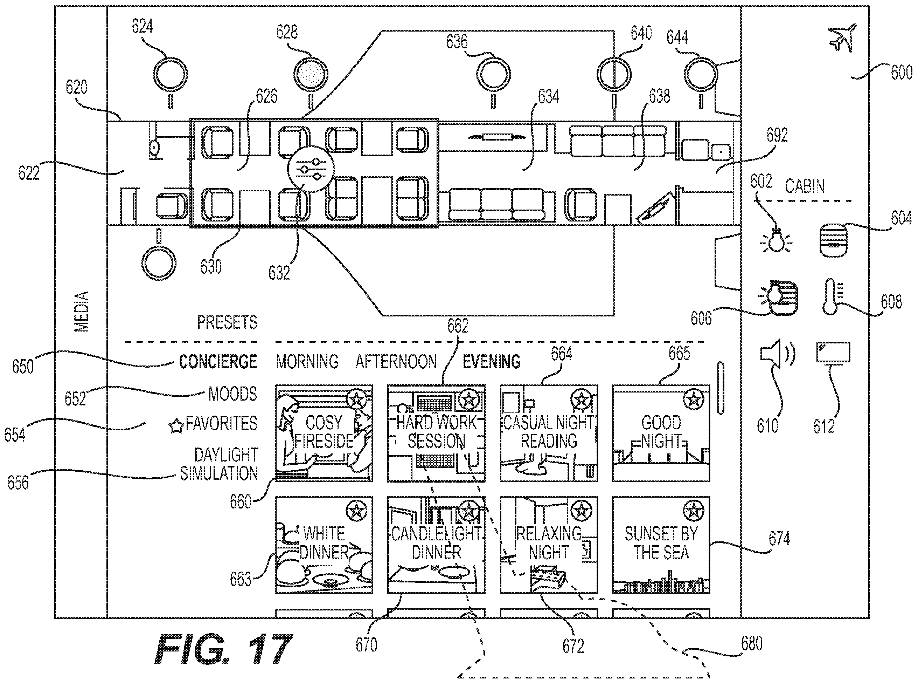

Turning now to Fig. 17, a user 680, for example a passenger or a crew member, interacting with the screen 600 is illustrated. In this example, the user 680 interacts with the screen via a touchscreen interface. Other kinds of interfaces may equally be used without departing from the scope of the invention. In Fig. 17, the user 680 is selecting the second preset 662.

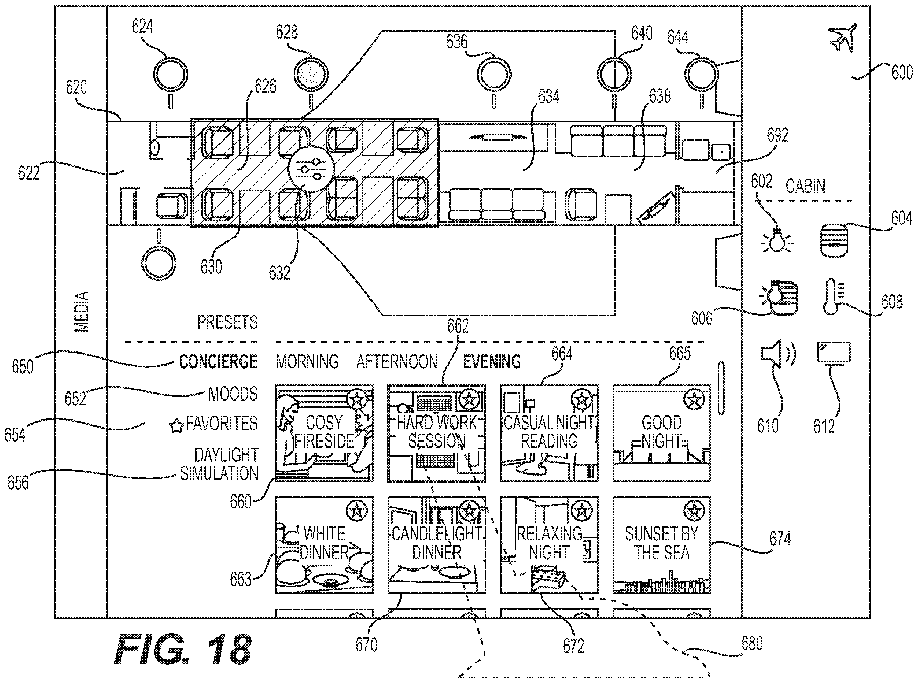

Fig. 18 illustrates the screen 600 with the visual selector 630 having a different appearance than in Fig. 16 and 17. This different appearance indicates that controllable parameters associated with the second preset 662 are being applied to the second aircraft cabin section 626. In some embodiments, the different appearance of the visual selector 630 may a change in a level of transparency, a change in color or both. Other alternatives may also be envisioned without departing from the scope of the present technology.

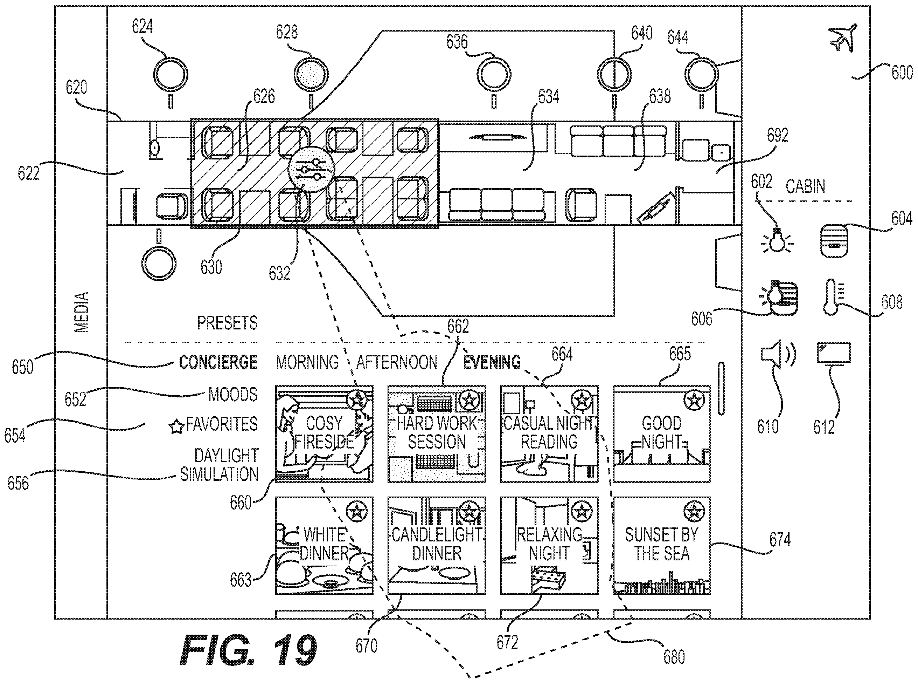

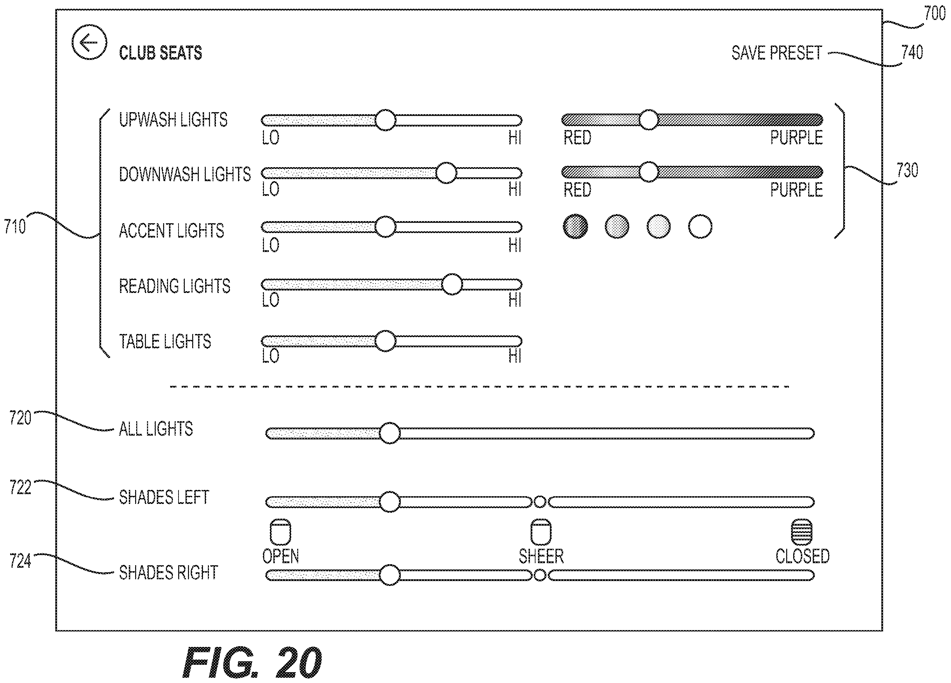

Fig. 19 illustrates the screen 600 while the user 680 is requesting a modification to the second preset 662. In the embodiment illustrated at Fig. 19, the user 680, by interacting with the configuration icon 632, triggers the modification of the second preset 662. Once the user 680 has pressed the configuration icon 632, a new window or a new screen is presented to the user 680. In some embodiments the new screen is a screen 700 illustrated at Fig. 20.

The screen 700 of Fig. 20 illustrates an embodiment of a combination of graphical user interface components allowing the user 680 to input, on the IO node, one or more modifications of controllable parameters. In the example set forth in Fig. 20, the controllable parameters may be modified via a first set of control bars 710 allowing individually controlling an intensity of light for multiple light sources located in the aircraft cabin section. The multiple light sources, in the example of Fig. 20, comprise upwash lights, downwash lights, accent lights, reading lights and table lights. The controllable parameters may also be modified via a second set of control bars 730 allowing individually controlling a color of light for multiple light sources located in the aircraft cabin section. The controllable parameters may also be modified via a light control bar 720 allowing controlling an intensity of light for all light sources located in the aircraft cabin section. The controllable parameters may further be modified via a first window shade control bar 722 and a second window shade control bar 724 allowing controlling an opening or a closing of the window shades of the aircraft cabin section. The screen 700 also comprises a "SAVE PRESET" icon 740 allowing saving of the modified controllable parameters. In some embodiments, a preset may be qualified as a modified preset as soon as at least one controllable parameter is modified by the user 280.

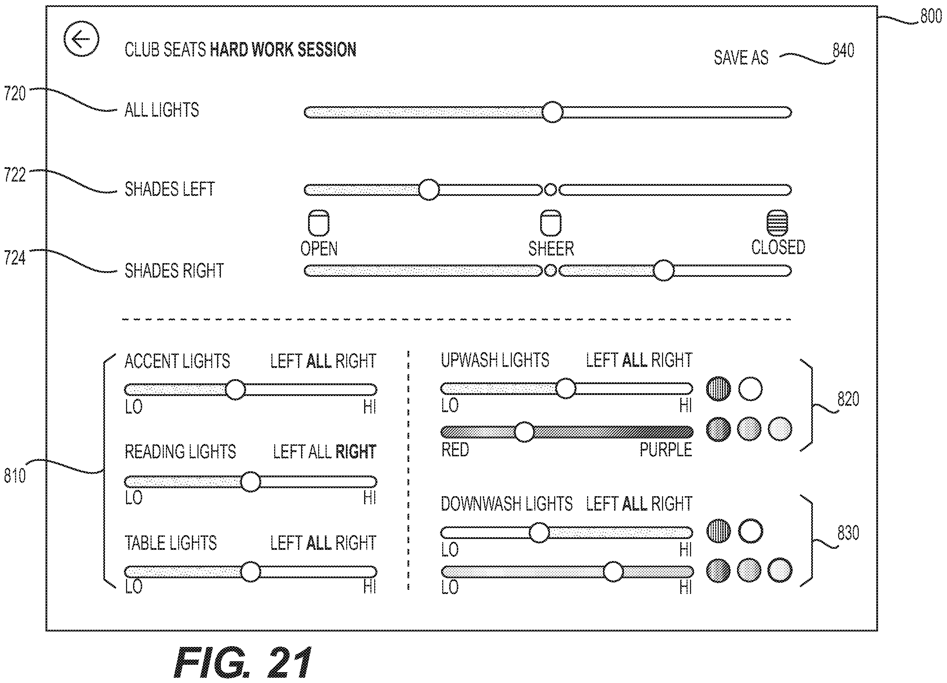

Turning now to Fig. 21, a screen 800 is illustrated. The screen 800 illustrates an alternative embodiment of a combination of graphical user interface components allowing the user 680 to input, on the IO node, one or more modifications of controllable parameters. The screen 800 comprises the light control bar 720, the first window shade control bar 722 and the second window shade control bar 724. The screen 800 also comprises a first set of control bars 810 allowing individually controlling an intensity of light for multiple light sources located in the aircraft cabin section. The screen 800 further comprises a second set of control bars 820 and a third set of control bars 830 allowing individually controlling a color of light for multiple light sources located in the aircraft cabin section. The screen 800 further comprises a "SAVE PRESET" icon 840 allowing saving of the modified controllable parameters.

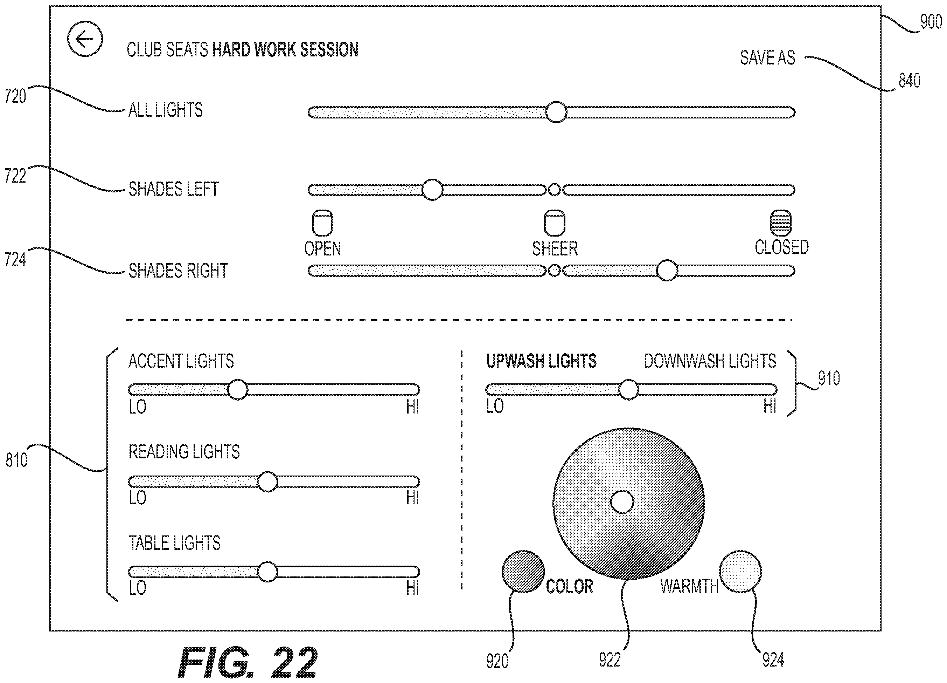

Turning now to Fig. 22, a screen 900 is illustrated. The screen 900 illustrates an alternative embodiment of a combination of graphical user interface components allowing the user 680 to input, on the IO node, one or more modifications of controllable parameters. The screen 900 comprises the light control bar 720, the first window shade control bar 722 and the second window shade control bar 724. The screen 900 also comprises the first set of control bars 810 allowing individually controlling an intensity of light for multiple light sources located in the aircraft cabin section. The screen 900 further comprises an upwash-downwash light control bar 910 allowing varying an intensity of light of upwash light sources and downwash light sources located in the aircraft cabin section. The screen 900 further comprises the "SAVE PRESET" icon 840. Fig. 22 also comprises light color and warmth graphical user interface control components, namely a control circle 922, a color-control selector 920 and a warmth-control selector 924. The control circle 922 allows the user 680 to select a specific color/warmth by moving a selector (represented as a white circle located close to a center of the control circle 922) within a surface defined by the control circle 922. The color-control selector 920 allows turning the control circle 922 into a color control function. The warmth-control selector 924 allows turning the control circle 922 into a warmth control function.

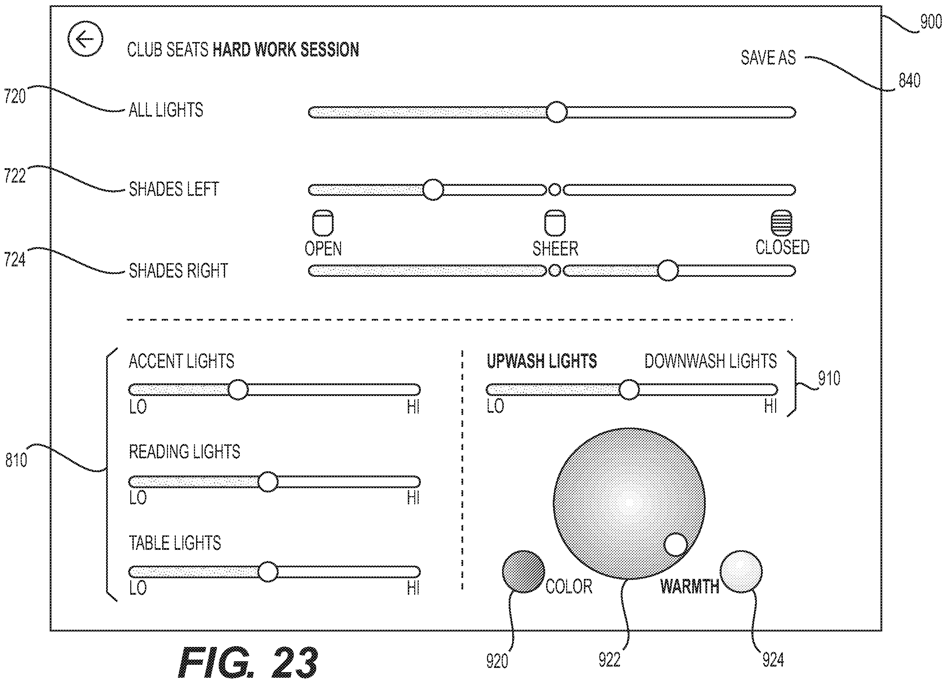

Fig. 23 illustrates the screen 900 of Fig. 22 with the selector (i.e., the white circle located close to a periphery of the control circle 922) in a different position than in Fig. 22. The different position of the selector results in a different color and/or warmth being selected by the user 680 via the control circle 922.

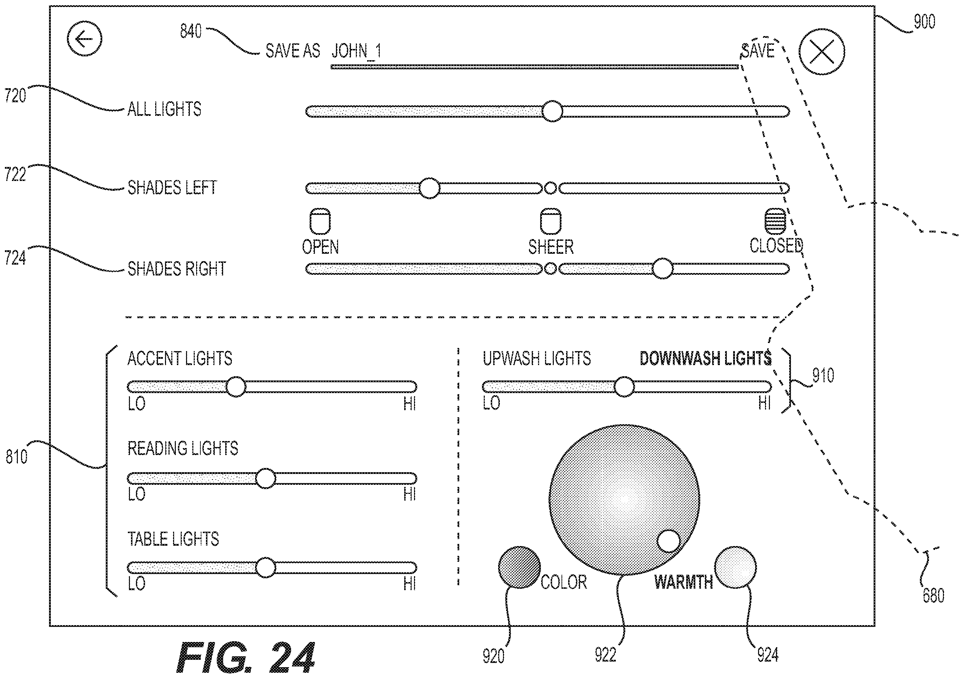

Fig. 24 illustrates the screen 900 of Fig. 22 and 23 while the user 680 is proceeding to a saving of the modified preset. As may be shown on Fig. 24, prior to activating the saving function, the user 680 has entered a title for the modified preset, namely "JOHN_1".

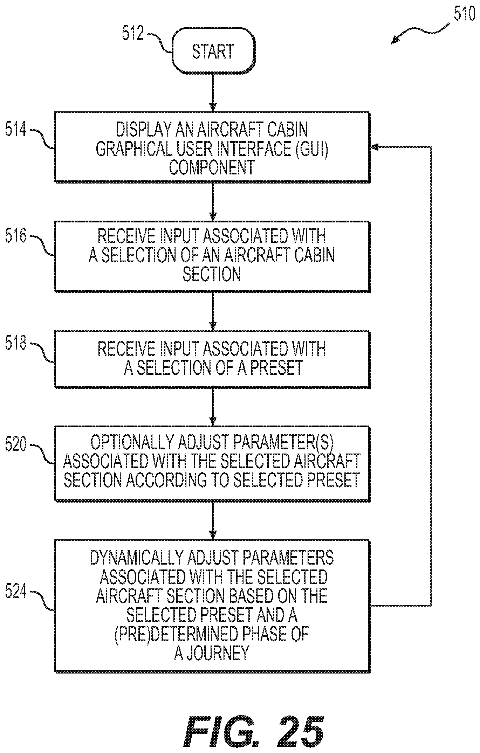

Fig. 25 illustrates another contemplated method 510 that is considered for operation of the distributed architecture 10, 26 of the present technology. The method 510 is considered to be generic to the operation of any of the IO nodes of the present technology.

The method 510 begins at step 312. The method 510, at step 514 proceeds to displaying, on an IO node, a graphical user interface component representing at least a portion of an aircraft cabin divided into at least two aircraft cabin sections. In some embodiments, the IO node is at least one of the passenger IO node and the crew IO node.

The method 510, at step 516, then proceeds to receiving, by the IO node, a first input from a user for selecting one of the at least two aircraft cabin sections. Then, at step 518, the method 510 proceeds to receiving, by the IO node, a second input from the user for selecting the preset of controllable parameters.

At a step 520, the method 510 may adjust control parameters associated with the selected aircraft cabin section according to the selected preset.

Then, at a step 524, the method 510 proceeds to dynamically adjusting, by the controller 16 associated with the distributed architecture, at least one of the controllable parameters based on the selected preset and the determined phase of the journey for the selected aircraft cabin section. The method may then return to step 514.

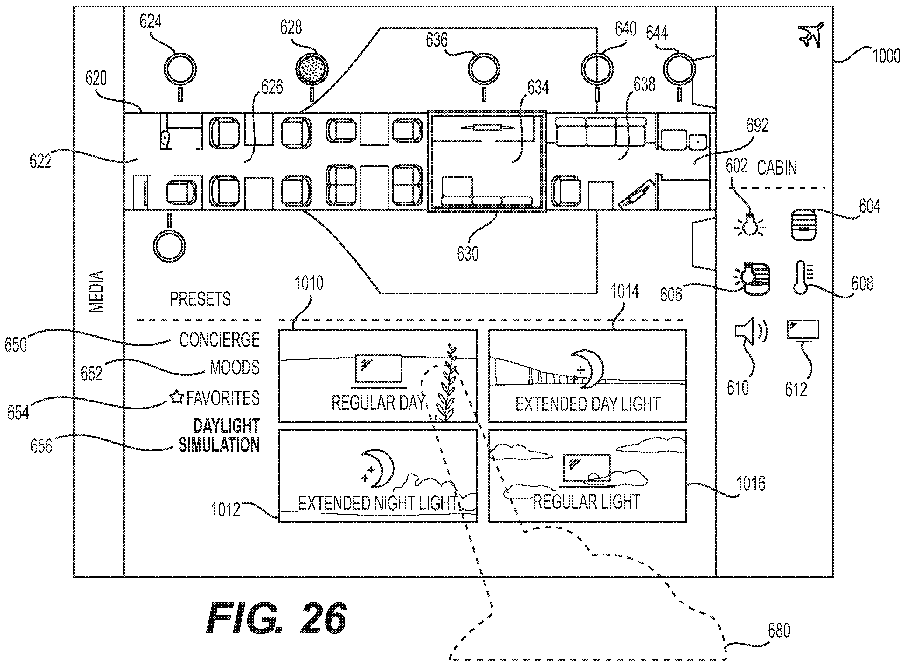

Turning now to Fig. 26, a screen 1000 to be displayed on an IO node is illustrated. In some embodiments, the IO node is at least one of a passenger IO node and a crew IO node. The screen 1000 comprises the set of icons 602, 604, 606, 608, 610 and 612 for controlling various functions of the aircraft cabin, including non-media functions (for example, via the icons 602, 604, 606 and 608) and media functions (for example via the icons 610 and 612). The screen 1000 also comprises the graphical user interface component 620 representing a portion of an aircraft cabin divided into a plurality of aircraft sections. As in the example of Fig. 16, the plurality of aircraft cabin sections comprises the first aircraft cabin section 622 associated with the first icon 624, the second aircraft cabin section 626 associated with the second icon 628, the third aircraft cabin section 634 associated with the third icon 636, the fourth aircraft cabin section 638 associated with the fourth icon 640 and the fifth aircraft cabin section 692 associated with the fifth icon 644. The screen 1000 also comprises the visual selector 630 allowing identifying a selected section of the aircraft cabin, in this example, the third aircraft cabin section 636.

The screen 1000 also comprises the plurality of categories for regrouping presets of controllable parameters of the aircraft cabin. The plurality of categories comprises the first category 650 entitled "CONCIERGE", the second category 652 entitled "MOODS", the third category 654 entitled "FAVORITES" and the fourth category 656 entitled "DAYLIGHT SIMULATION". In the example of Fig. 26, the fourth category 656 has been previously selected which has caused a plurality of icons representing presets to be displayed. The presets comprise a first preset 1010 entitled "REGULAR DAY", a second preset 1014 entitled "EXTENDED DAY LIGHT", a third preset 1012 entitled "EXTENDED NIGHT LIGHT" and a fourth preset 1016 entitled "REGULAR LIGHT". In the example of Fig. 26, the first preset 1010 has been selected.

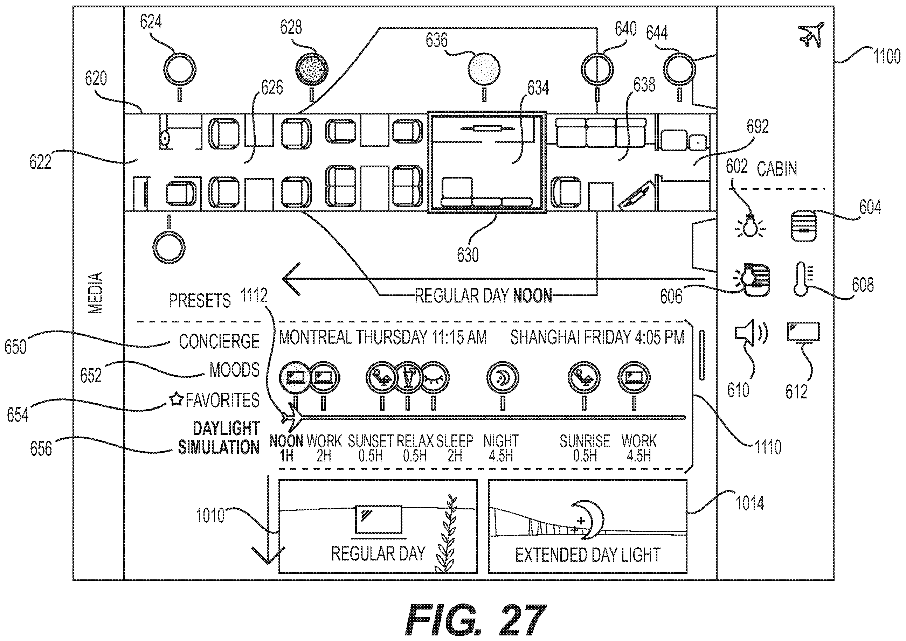

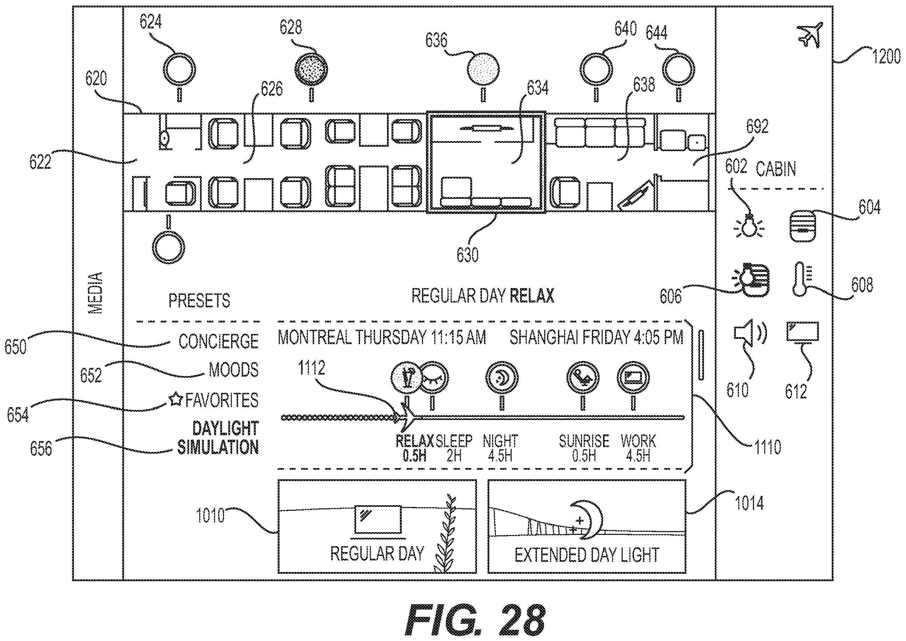

Turning now to Fig. 27 and 28, screens 1100 and 1200 are illustrated. The screens 1100 and 1200 are an updated version of the screen 1000 further comprising a journey timeline graphical user interface component 1112. The journey time line GUI component 1112 comprises multiple icons organized according to a temporal sequence and representing multiple moments of the journey. In some embodiments, the multiple icons represent moments of the journey at which the controllable parameters are dynamically adjusted in accordance with a selected preset. In some other embodiments, the controllable parameters are dynamically and continuously adjusted while the journey progresses.

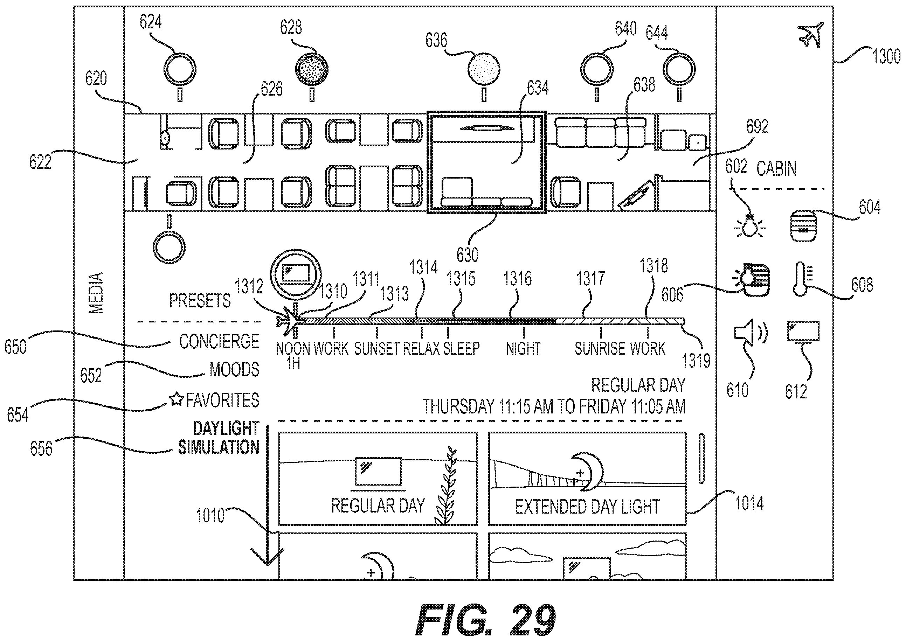

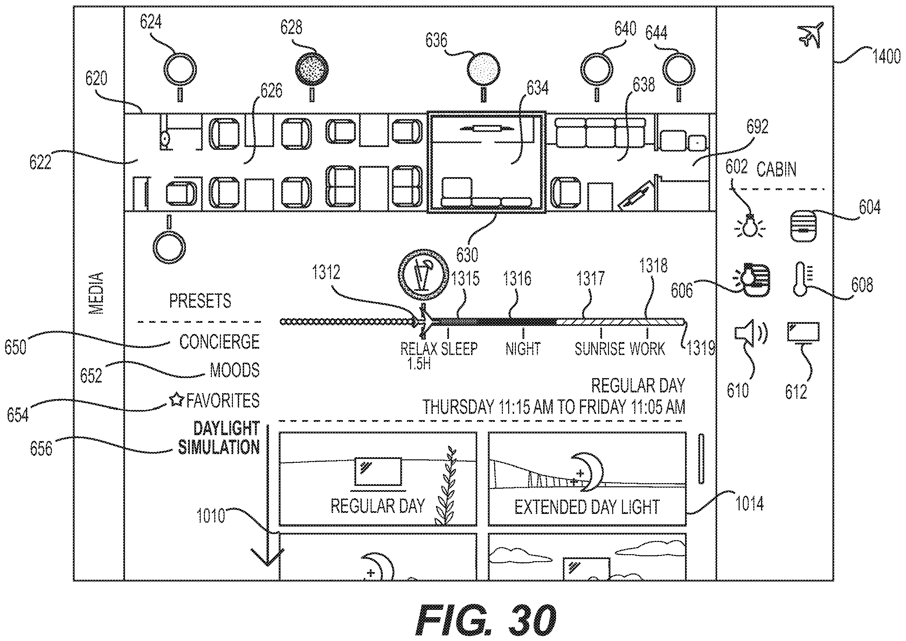

Turning now to Fig. 29 and 30, screens 1300 and 1400 are illustrated. The screens 1300 and 1400 are an alternative embodiment of the screens 1100 and 1200 in which a journey time line graphical user interface component 1312 is illustrated. The journey time line GUI component 1312 comprises multiples journey segments 1310, 1311, 1313, 1314, 1315, 1316, 1317, 1318 and 1319. Each one of the multiples journey segments represents a moment of the journey at which the controllable parameters are dynamically adjusted in accordance with a selected preset. In some other embodiments, the controllable parameters are dynamically and continuously adjusted while the journey progresses.

As discussed above, inputs provided by any of the IO nodes 20, 22 and 28-34 are first provided to the controller 16. The reason for this is simple: the controller 16 provides overall control for the functions that are available to passengers in the cabin 48. Without a centralized control, it is possible that passengers might issue instructions that are contrary to one another. The controller 16 may be programmed to address these conflicts or issue an alarm when conflicts arise.

As noted above, it is contemplated that the controller 16 will incorporate a command hierarchy that will resolve any conflicts between the various inputs received from the various nodes 20, 22, 28, 30, 32, 34. The command hierarchy may be based on the status of the person *(i.e.,* crew versus passenger) or based on the location of the IO node *(i.e.,* window IO node 34 versus bulkhead IO node 28). It is also noted that the command and control functions need not be incorporated solely in the controller 16 but may be incorporated into other features without departing from the scope of the present technology. The command hierarchy is based on an operation mode of the aircraft. The operation mode may be a take-off mode, a cruise mode, a landing mode and/or an emergency mode. The distributed architecture determines the operation mode via a data exchange with an avionic system of the aircraft. Other alterative as to how the operation mode is determined may also be envisioned but are not falling under the scope of the present invention. In some embodiments, upon determination that the operation mode has changed, the distributed architecture may modify the command hierarchy (e.g., if the operation mode switches to "emergency mode" then a command priority may be given to the crew IO node over the passenger IO node). Other variations may also be envisioned without departing from the scope of the present technology.

As also noted above, the present technology contemplates reliance on an isometric view of the cabin 48 of the aircraft 36. The isometric view permits a user to select specific controllable features and zones within the aircraft 36. For example, the user may select one of the passenger seating areas 58, 60, 62 over which control is to be asserted. Alternatively, the user may select an individual seat 74 over which controls are to be asserted. Still further, by selecting a suitable icon from an isometric view of the cabin 48 of the aircraft 36, the user may assert control over one or more of the monitors 96 within the aircraft 36. The isometric view of the cabin 48 of the aircraft 36 provides an easily understood interface for a user to direct inputted commands and assert control over one or more controllable parameters within the cabin 48 of the aircraft 36.

As noted above, the present technology is not intended to be limited solely to the embodiment(s) described herein. The scope of the invention is defined by the appended claims.

## Claims

1. A distributed architecture (10) for multi-nodal control of functions in an aircraft cabin (48), comprising:
a processor (14);
a controller (16) operatively connected to the processor (14);
a passenger-controlled IO node (20) operatively connected to the controller (16); and
a crew-controlled IO node (22) operatively connected to the controller (16);
wherein the controller (16) controls at least one controllable parameter in response to inputs received from at least one of the passenger-controlled IO node (20) and the crew-controlled IO node (22),
wherein the at least one controllable parameter comprises at least one of light intensity in the aircraft cabin (48), color of light in the aircraft cabin (48), temperature in the aircraft cabin (48), and a degree of openness of a window shade in the aircraft cabin (48), and
wherein the controller includes a command hierarchy to prioritize inputs received from the passenger-controlled IO node (20) and the crew-controlled IO node (22) to prevent conflicts between the inputs, the distributed architecture being **characterized in that** the command hierarchy prioritizes inputs received from the passenger-controlled IO node (20) and the crew-controlled IO node (22) based on an operation mode of the aircraft, said operation mode being determined via a data exchange with an avionic system of the aircraft.

2. The distributed architecture (10) of claim 1, wherein the command hierarchy prioritizes inputs from the crew-controlled IO node (22) for at least one of the light intensity in the aircraft cabin (48), the color of light in the aircraft cabin (48), the temperature in the aircraft cabin (48), and the degree of openness of the window shades in the aircraft cabin (48), and prioritizes inputs from the passenger-controlled IO node (20) for at least one other of the light intensity in the aircraft cabin (48), the color of light in the aircraft cabin (48), the temperature in the vehicle cabin (48), and the degree of openness of the window shades in the aircraft cabin (48).

3. The distributed architecture of claim 1, wherein a modification of the operation mode of the aircraft results in a modification of the command hierarchy.

4. The distributed architecture of claim 1, wherein the operation mode of the aircraft comprises at least one a take-off mode, a cruise mode, a landing mode and an emergency mode.

5. The distributed architecture of claim 1, wherein the passenger-controlled IO node (20) comprises at least one of a side ledge IO node (30) and a mobile passenger-controlled IO node.

6. The distributed architecture of claim 1, wherein the crew-controlled IO node (22) comprises at least one of a mobile crew-controlled IO node and a non-mobile crew-controlled IO node.

7. The distributed architecture of claim 1, wherein the controller controls the at least one controllable parameter in response to inputs received from a bulkhead IO node (28).

8. The distributed architecture of claim 7, wherein the bulkhead IO node (2 8) is disposed on a bulkhead (72) within the aircraft cabin (48).

9. The distributed architecture of claim 1, wherein a side ledge IO node (30) is disposed in at least one of a ledge adjacent to a passenger seat (74), a cabinet adjacent to a divan (84) and a night stand adjacent to a bed.

10. The distributed architecture of claim 7 wherein the controller includes a command hierarchy to prioritize inputs received from at least two of the bulkhead IO node (28), the side ledge IO node (30), the mobile passenger-controlled IO node and the crew mobile IO node to prevent conflicts between the inputs.

11. The distributed architecture of claim 1, wherein the controllable parameters are associated with at least one of the entire cabin (48) of the aircraft, at least one zone within the cabin (48) of the aircraft and at least one seat (74) within the cabin (48) of the aircraft.

12. The distributed architecture of claim 1, wherein the controllable parameters also includes at least one of media type, media content, media volume, scheduling, notes, reports, presets and a passenger manifest.

13. A non-transitory executable computer program product providing instructions for a method for controlling functions in an aircraft cabin (48) having a distributed architecture (10) for multi-nodal control, the instructions, upon being executed by a processor (14), causing:
displaying, on a display screen, a menu for at least one controllable parameter on a graphical user interface of at least one of a passenger-controlled IO node (20) and a crew-controlled IO node (22);
receiving a control input for the at least one controllable parameter from the at least one of the passenger-controlled IO node (20) and the crew-controlled IO node (22);
adjusting, by a controller (16), the at least one controllable parameter consistent with the control input,
wherein the at least one controllable parameter comprises at least one of light intensity in the aircraft cabin (48), color on light in the aircraft cabin (48), temperature in the aircraft cabin (48) and a degree of openness of a window shade in the aircraft cabin (48), and
wherein the controller (16) includes a command hierarchy to prioritize the inputs received from the passenger-controlled IO node (20) and the crew-controlled IO node (22) so as to prevent conflicts between the inputs, the non-transitory executable computer program product being **characterized in that** the command hierarchy prioritizes inputs received from the passenger-controlled IO node (20) and the crew-controlled IO node (22) based on an operation mode of the aircraft, said operation mode being determined via a data exchange with an avionic system of the aircraft.

14. The non-transitory executable computer program product of claim 13, wherein the passenger-controlled IO node (20) comprises at least one of a side ledge IO node (30) and a passenger mobile IO node.

## Patentansprüche

1. Verteilte Architektur (10) für Mehrknotensteuerung von Funktionen in einer Flugzeugkabine (48), umfassend:
einen Prozessor (14);
eine Steuerung (16), die funktionsfähig mit dem Prozessor (14) verbunden ist; einen Passagier-gesteuerten IO-Knoten (20), der funktionsfähig mit der Steuerung (16) verbunden ist; und
einen Besatzung-gesteuerten IO-Knoten (22), der funktionsfähig mit der Steuerung (16) verbunden ist; wobei die Steuerung (16) mindestens einen steuerbaren Parameter in Reaktion auf Eingänge, die von mindestens einem von dem Passagier-gesteuerten IO-Knoten (20) und dem Besatzung-gesteuerten IO-Knoten (22) empfangen werden,
wobei der mindestens eine steuerbare Parameter mindestens eines von Lichtintensität in der Flugzeugkabine (48), Lichtfarbe in der Flugzeugkabine (48), Temperatur in der Flugzeugkabine (48) und Öffnungsgrad einer Jalousie in der Flugzeugkabine (48) umfasst, und
wobei die Steuerung eine Befehlshierarchie beinhaltet, um Eingänge zu priorisieren, die von dem Passagier-gesteuerten IO-Knoten (20) und dem Besatzung-gesteuerten IO-Knoten (22) empfangen werden, um Konflikte zwischen den Eingängen zu verhindern,
wobei die verteilte Architektur **dadurch gekennzeichnet ist, dass** die Befehlshierarchie Eingänge, die von dem Passagier-gesteuerten IO-Knoten (20) und dem Besatzung-gesteuerten IO-Knoten (22) empfangen werden, basierend auf einem Betriebsmodus des Flugzeugs priorisiert, wobei dieser Betriebsmodus durch einen Datenaustausch mit einem Avionik-System des Flugzeugs bestimmt wird.

2. Verteilte Architektur (10) nach Anspruch 1, wobei die Befehlshierarchie Eingänge von dem Besatzung-gesteuerten IO-Knoten (22) für mindestens eines von der Lichtintensität in der Flugzeugkabine (48) und/oder der Lichtfarbe in der Flugzeugkabine (48) und/oder der Temperatur in der Flugzeugkabine (48) und/oder dem Öffnungsgrad der Jalousien in der Flugzeugkabine (48) priorisiert, und Eingänge von dem Passagier-gesteuerten IO-Knoten (20) für mindestens eines von der Lichtintensität in der Flugzeugkabine (48) und/oder der Lichtfarbe in der Flugzeugkabine (48) und/oder der Temperatur in der Fahrzeugkabine (48) und/oder dem Öffnungsgrad der Jalousien in der Flugzeugkabine (48) priorisiert.

3. Verteilte Architektur nach Anspruch 1, wobei eine Änderung des Betriebsmodus des Flugzeugs in einer Änderung der Befehlshierarchie resultiert.

4. Verteilte Architektur nach Anspruch 1, wobei der Betriebsmodus des Flugzeugs mindestens eines von einem Abhebemodus, einem Reiseflugmodus, einem Landemodus und einen Notfallmodus umfasst.

5. Verteilte Architektur nach Anspruch 1, wobei der Passagier-gesteuerte IO-Knoten (20) mindestens eines von einem Seitenleisten-IO-Knoten (30) und einem mobilen Passagier-gesteuerten IO-Knoten umfasst.

6. Verteilte Architektur nach Anspruch 1, wobei der Besatzung-gesteuerte IO-Knoten (22) mindestens eines von einem mobilen Besatzung-gesteuerten IO-Knoten und einem nicht mobilen Besatzung-gesteuerten IO-Knoten umfasst.

7. Verteilte Architektur nach Anspruch 1, wobei die Steuerung den mindestens einen steuerbaren Parameter als Reaktion auf Eingänge steuert, die von einem Trennwand-IO-Knoten (28) empfangen werden.

8. Verteilte Architektur nach Anspruch 7, wobei der Trennwand-IO-Knoten (28) an einer Trennwand (72) innerhalb der Flugzeugkabine (48) angeordnet ist.

9. Verteilte Architektur nach Anspruch 1, wobei ein Seitenleisten-IO-Knoten (30) in mindestens einem von einer Seitenleiste neben einem Passagiersitz (74), einem Schrank neben einer Polsterbank (84) und einem Nachttisch neben einem Bett angeordnet ist.

10. Verteilte Architektur nach Anspruch 7, wobei die Steuerung eine Befehlshierarchie beinhaltet, um Eingänge zu priorisieren, die von mindestens zwei von dem Trennwand-IO-Knoten (28), dem Seitenleisten-IO-Knoten (30), dem mobilen Passagier-gesteuerten IO-Knoten und dem mobilen Besatzung-IO-Knoten empfangen werden, um Konflikte zwischen den Eingängen zu verhindern.

11. Verteilte Architektur nach Anspruch 1, wobei die steuerbaren Parameter mit mindestens einem von der gesamten Kabine (48) des Flugzeugs, mindestens einer Zone innerhalb der Kabine (48) des Flugzeugs und mindestens einem Sitz (74) innerhalb der Kabine (48) des Flugzeugs assoziiert sind.

12. Verteilte Architektur nach Anspruch 1, wobei die kontrollierbaren Parameter auch mindestens eines von Medientyp, Medieninhalt, Medienvolumen, Zeitplanung, Notizen, Berichte, Voreinstellungen und ein Passagiermanifest beinhalten.

13. Nicht transitorisches ausführbares Computerprogrammprodukt, das Anweisungen für ein Verfahren zum Steuern von Funktionen in einer Flugzeugkabine (48), das eine verteilte Architektur (10) aufweist, für eine Mehrknotensteuerung bereitstellt, wobei die Befehle bei ihrer Ausführung durch einen Prozessor (14) Folgendes bewirken:
Anzeigen, auf einem Anzeigebildschirm, eines Menüs für mindestens einen steuerbaren Parameter auf einer graphischen Benutzeroberfläche von mindestens einem von einem Passagier-gesteuerten IO-Knoten (20) und einem Besatzung-gesteuerten IO-Knoten (22);
Empfangen eines Steuereingangs für den mindestens einen steuerbaren Parameter von dem mindestens einen von dem Passagier-gesteuerten IO-Knoten (20) und dem Besatzung-gesteuerten IO-Knoten (22);
Einstellen, durch eine Steuerung (16), des mindestens einen steuerbaren Parameters in Übereinstimmung mit dem Steuereingang,
wobei der mindestens eine steuerbare Parameter mindestens eines von Lichtintensität in der Flugzeugkabine (48), Lichtfarbe in der Flugzeugkabine (48), Temperatur in der Flugzeugkabine (48) und Öffnungsgrad einer Jalousie in der Flugzeugkabine (48) umfasst, und
wobei die Steuerung (16) eine Befehlshierarchie zum Priorisieren der von dem von den Passagieren gesteuerten IO-Knoten (20) und dem von der Besatzung gesteuerten IO-Knoten (22) empfangenen Eingaben enthält, um Konflikte zwischen den Eingaben zu verhindern, wobei das nicht transitorische ausführbare Computerprogrammprodukt **dadurch gekennzeichnet ist, dass** die Befehlshierarchie Eingänge, die von dem Passagier-gesteuerten IO-Knoten (20) und dem Besatzung-gesteuerten IO-Knoten (22) empfangen werden, basierend auf einem Betriebsmodus des Flugzeugs priorisiert, wobei dieser Betriebsmodus durch einen Datenaustausch mit einem Avionik-System des Flugzeugs bestimmt wird.

14. Nicht transitorisches ausführbares Computerprogrammprodukt nach Anspruch 13, wobei der Passagier-gesteuerte IO-Knoten (20) mindestens einen von einem Seitenleisten-IO-Knoten (30) und einem mobilen Passagier-IO-Knoten umfasst.

## Revendications

1. Architecture distribuée (10) pour la commande multi-nodale de fonctions dans une cabine d'aéronef (48), comprenant :
un processeur (14) ;
un dispositif de commande (16) connecté fonctionnellement au processeur (14) ;
un nœud d'entrée/sortie (10) commandé par le passager (20) connecté fonctionnellement au dispositif de commande (16) ;
et
un nœud IO commandé par l'équipage (22) connecté fonctionnellement au dispositif de commande (16) ; ledit dispositif de commande (16) commandant au moins un paramètre commandable en réponse à des entrées reçues en provenance d'au moins l'un du nœud IO commandé par le passager (20) et du nœud IO commandé par l'équipage (22),
ledit au moins un paramètre commandable comprenant au moins l'un de l'intensité lumineuse dans la cabine d'aéronef (48), de la couleur de la lumière dans la cabine d'aéronef (48), de la température dans la cabine d'aéronef (48) et d'un degré d'ouverture d'un store de fenêtre dans la cabine d'aéronef (48), et
ledit dispositif de commande comprenant une hiérarchie de commandes pour prioriser les entrées reçues en provenance du nœud IO commandé par le passager (20) et du nœud IO commandé par l'équipage (22) pour éviter les conflits entre les entrées,
l'architecture distribuée étant **caractérisée en ce que** la hiérarchie de commande donne la priorité aux entrées reçues en provenance du nœud IO commandé par le passager (20) et du nœud IO commandé par l'équipage (22) sur la base d'un mode de fonctionnement de l'aéronef, ledit mode de fonctionnement étant déterminé par l'intermédiaire d'échange de données avec un système avionique de l'aéronef.

2. Architecture distribuée (10) selon la revendication 1, ladite hiérarchie de commande donnant la priorité aux entrées en provenance du nœud IO commandé par l'équipage (22) pour au moins l'un de l'intensité lumineuse dans la cabine d'aéronef (48), de la couleur de la lumière dans la cabine d'aéronef (48), de la température dans la cabine d'aéronef (48) et du degré d'ouverture des stores de fenêtre dans la cabine d'aéronef (48), et donne la priorité aux entrées en provenance du nœud IO commandé par le passager (20) pour au moins une autre de l'intensité lumineuse dans la cabine d'aéronef (48), de la couleur de la lumière dans la cabine d'aéronef (48), de la température dans la cabine de véhicule (48) et du degré d'ouverture des stores de fenêtre dans la cabine d'aéronef (48).

3. Architecture distribuée selon la revendication 1, une modification du mode de fonctionnement de l'aéronef entraînant une modification de la hiérarchie de commandes.

4. Architecture distribuée selon la revendication 1, ledit mode de fonctionnement de l'aéronef comprenant au moins un mode de décollage, un mode de croisière, un mode d'atterrissage et un mode d'urgence.

5. Architecture distribuée selon la revendication 1, ledit nœud IO commandé par le passager (20) comprenant au moins l'un d'un nœud IO de rebord latéral (30) et d'un nœud IO commandé par un passager mobile.

6. Architecture distribuée selon la revendication 1, ledit nœud IO commandé par l'équipage (22) comprenant au moins l'un d'un nœud IO commandé par l'équipage mobile et d'un nœud IO commandé par l'équipage non mobile.

7. Architecture distribuée selon la revendication 1, ledit dispositif de commande commandant l'au moins un paramètre commandable en réponse à des entrées reçues en provenance d'un nœud IO de cloison (28).

8. Architecture distribuée selon la revendication 7, ledit nœud IO de cloison (28) étant disposé sur une cloison (72) à l'intérieur de la cabine d'aéronef (48).

9. Architecture distribuée selon la revendication 1, un nœud IO de rebord latéral (30) étant disposé dans au moins l'un d'un rebord adjacent à un siège passager (74), d'une armoire adjacente à un divan (84) et d'une table de nuit adjacente à un lit.

10. Architecture distribuée selon la revendication 7, ledit dispositif de commande comprenant une hiérarchie de commandes pour prioriser les entrées reçues en provenance d'au moins deux du nœud IO de cloison (28), du nœud IO de rebord latéral (30), du nœud IO commandé par le passager mobile et du nœud IO mobile d'équipage pour éviter les conflits entre les entrées.

11. Architecture distribuée selon la revendication 1, lesdits paramètres commandables étant associés à au moins l'une de la cabine entière (48) de l'aéronef, d'au moins une zone à l'intérieur de la cabine (48) de l'aéronef et d'au moins un siège (74) à l'intérieur de la cabine (48) de l'aéronef.

12. Architecture distribuée selon la revendication 1, lesdits paramètres commandables comprenant également au moins l'un du type de média, du contenu multimédia, du volume multimédia, de la programmation, des notes, des rapports, des préréglages et d'un manifeste de passager.

13. Produit programme informatique exécutable non transitoire fournissant des instructions pour un procédé permettant de commander des fonctions dans une cabine d'aéronef (48) possédant une architecture distribuée (10) pour une commande multinœud, les instructions, lorsqu'elles sont exécutées par un processeur (14), entraînant :
l'affichage, sur un écran d'affichage, d'un menu pour au moins un paramètre commandable sur une interface utilisateur graphique d'au moins l'un d'un nœud IO commandé par le passager (20) et d'un nœud IO commandé par l'équipage (22) ;
la réception d'une entrée de commande pour l'au moins un paramètre commandable en provenance de l'au moins un du nœud IO commandé par le passager (20) et du nœud IO commandé par l'équipage (22) ;
le réglage, par un dispositif de commande (16), du au moins un paramètre commandable cohérent avec l'entrée de commande,
ledit au moins un paramètre commandable comprenant au moins l'un de l'intensité lumineuse dans la cabine d'aéronef (48), de la couleur de la lumière dans la cabine d'aéronef (48), de la température dans la cabine d'aéronef (48) et d'un degré d'ouverture d'un store de fenêtre dans la cabine d'aéronef (48), et
ledit dispositif de commande (16) comprenant une hiérarchie de commandes pour prioriser les entrées reçues en provenance du nœud IO commandé par le passager (20) et du nœud IO commandé par l'équipage (22) de façon à éviter les conflits entre les entrées, le produit programme informatique exécutable non transitoire étant **caractérisé en ce que** la hiérarchie de commande donne la priorité aux entrées reçues en provenance du nœud IO commandé par le passager (20) et du nœud IO commandé par l'équipage (22) sur la base d'un mode de fonctionnement de l'aéronef, ledit mode de fonctionnement étant déterminé par l'intermédiaire d'un échange de données avec un système avionique de l'aéronef.

14. Produit programme informatique exécutable non transitoire selon la revendication 13, ledit nœud IO commandé par le passager (20) comprenant au moins l'un d'un nœud IO de rebord latéral (30) et d'un nœud IO mobile de passager.
